# EUROPEAN PATENT APPLICATION

(11) **EP 4 848 411 A2**
(43) Date of publication of application: **02.12.2026**
(21) Application number: 26211404.4
(22) Date of filing: 26.12.2024
(51) Int. Cl.: H01M 10/6568

(54) **COOLING HEAT EXCHANGER**

(30) Priority: 13.02.2024 JP 2024019534; 31.10.2024 JP 2024191989
(62) Document number(s) of the earlier application(s) in accordance with Art. 76 EPC: 24924523.4 / 4 832 173
(71) Applicant: Sumitomo Riko Company Limited, Komaki-shi, Aichi 485-8550 (JP)
(72) Inventor: WAKAZONO, Yukinori, 485-8550 Aichi (JP); KANEGAE, Ryousuke, 485-8550 Aichi (JP)
(74) Representative: SSM Sandmair

(57) **Abstract**

Provided is a cooling heat exchanger, which has a new structure and is capable of more efficiently exhibiting cooling performance. A cooling heat exchanger 10 has formed therein a cooling flow passage 36, through which a cooling heat medium flows, and cools a cooling target 52 superposed on a cooling surface 16. The cooling flow passage 36 is composed of a plurality of flow passage parts 40 extending adjoiningly in parallel, and is provided with a parallel flow passage part 38 in which the heat medium-flowing directions in the flow passage parts 40 are the same. A plurality of projections 42 which disturb the flowing of the heat medium are formed in the parallel flow passage part 38. Regions in which the actions of disturbing the flowing of the heat medium by the projections 42 are different from each other are set in the parallel flow passage part 38.

## Description

### TECHNICAL FIELD

The present invention relates to a cooling heat exchanger to be used for cooling a cooling target such as a battery used in a motorized vehicle, for example.

### BACKGROUND ART

In a motorized vehicle such as an electric car or a hybrid car, for example, a battery or the like as a cooling target generates a large amount of heat as a result of size reduction or higher performance thereof, thereby increasing importance of cooling performance. As disclosed in U.S. Patent No. US 10,355,331 B2 (Patent Document 1), for example, a cooling heat exchanger conventionally employed has a configuration where a cooling flow path for causing a cooling heat medium to flow therein is formed inside the cooling heat exchanger. In this cooling heat exchanger, a cooling surface is superposed on a cooling target such as a battery and the cooling surface is cooled by the cooling medium flowing in the cooling flow path to cool the cooling target.

### BACKGROUND ART DOCUMENT

### PATENT DOCUMENT

Patent Document 1: US 10,355,331 B2

### SUMMARY OF THE INVENTION

### PROBLEM THE INVENTION ATTEMPTS TO SOLVE

As depicted in FIG. 1 of Patent Document 1, in some cases, the cooling flow path includes a parallel flow path unit composed of a plurality of flow path parts extending in parallel and causing the heat medium to flow therein in the same direction. Providing such a parallel flow path unit makes it possible to realize partial width increase in the cooling flow path responsive to the width dimension of the cooling target, and to prevent loss of control over the flow of the heat medium in the part increased in width.

Such a parallel flow path unit is provided in a part to directly contribute to heat exchange with the cooling target, for example. Hence, a difference in temperature of the heat medium is caused easily by a temperature distribution of the cooling target or a position viewed in a flow direction of the heat medium, etc., causing a problem that non-uniformity will be caused in cooling performance.

Furthermore, the heat medium flowing through a position closer to the cooling target is warmed easily through heat exchange with the cooling target, and the heat medium flowing through a position farther from the cooling target is less likely to be increased in temperature through heat exchange with the cooling target. Hence, a temperature distribution responsive to a distance from the cooling target is likely to be generated in a flow path cross section. As a result, another problem has found that cooling performance achieved by the heat medium flowing in the parallel flow path unit cannot be made available in its entirety for cooling of the cooling target.

To solve the problem peculiar to a cooling heat exchanger including a parallel flow path unit such as the one described above, a problem to be solved by the present invention is to provide a cooling heat exchanger having a novel structure capable of fulfilling cooling performance more efficiently in the cooling heat exchanger including the parallel flow path unit.

### MEANS FOR SOLVING THE PROBLEM

Hereinafter, preferred embodiments for grasping the present invention will be described. However, all the preferred embodiments described below are exemplary and can be appropriately combined with each other. Besides, a plurality of elements described in each preferred embodiment can be recognized and adopted as independently as possible, or can also be appropriately combined with any element described in other preferred embodiments. By doing so, in the present invention, various other preferred embodiments can be realized without being limited to those described below.

A first preferred embodiment is intended for a cooling heat exchanger comprising : a cooling surface configured to be superposed on a cooling target for cooling the cooling target; and a cooling flow path for causing a cooling heat medium to flow therein, wherein the cooling flow path includes a parallel flow path unit composed of a plurality of flow path parts extending in parallel and next to each other and causing the heat medium to flow in the same direction between the plurality of flow path parts, the parallel flow path unit is provided with a plurality of projections for disturbing a flow of the heat medium, and regions where action of disturbing the flow of the heat medium using the projection works differently are defined in the parallel flow path unit.

According to the cooling heat exchanger structured following the present preferred embodiment, by the provision of the projection in the parallel flow path unit, the heat medium flowing in the parallel flow path unit is stirred by the projection to bring the heat medium to a substantially uniform temperature in a flow path cross section. This makes it possible to prevent the occurrence of a situation where only part of the heat medium flowing through a position near the cooling target is heated to reduce heat exchange efficiency steeply and excessively, thereby encouraging improvement in cooling performance.

On the basis of a difference in the formation of the projections in terms of arrangement, the number of the projections, formation density, shape, size and others, the regions where the action of disturbing the flow of the heat medium works differently are defined. Thus, in a region where the heat medium is increased in temperature largely through heat exchange with the cooling target, for example, the flow of the heat medium is disturbed intensely by the projection to encourage uniformity in the temperature of the heat medium. On the other hand, in a region where temperature increase of the heat medium is small so the heat medium is not required to be stirred, the action of disturbing the flow of the heat medium using the projection is suppressed to allow the heat medium to flow smoothly. If three or more regions are defined as regions where the action of disturbing the flow of the heat medium using the projection is to work, it is simply required to make a difference in the action of disturbing the flow of the heat medium using the projection at least in one of the regions from the other regions, and the action of disturbing the flow of the heat medium using the projection is not required to differ between all the regions.

According to a second preferred embodiment, in the cooling heat exchanger according to the first preferred embodiment, the regions where the action of disturbing the flow of the heat medium works differently are defined at different positions in a flow direction of the heat medium in at least one of the flow path parts forming the parallel flow path unit.

According to the cooling heat exchanger structured following the present preferred embodiment, turbulent flow facilitating action of disturbing the flow of the heat medium using the projection differs in the flow direction of the heat medium. Thus, by defining a region where the turbulent flow facilitating action works intensely in a part where a difference in temperature of the heat medium is likely to become large between a position closer to and a position farther from the cooling target in the parallel flow path unit, for example, it becomes possible to reduce a temperature difference in the flow direction of the heat medium.

Furthermore, in a part where a difference in temperature of the heat medium is likely to become small between a position closer to the cooling target and a position farther from the cooling target in the parallel flow path unit, a region where a turbulence in the flow of the heat medium generated by the projection is suppressed is defined. This realizes smooth flow of the heat medium.

According to a third preferred embodiment, in the cooling heat exchanger according to the second preferred embodiment, regarding the regions defined at the different positions in the flow direction of the heat medium in the parallel flow path unit, where the action of disturbing the flow of the heat medium works differently, the action of disturbing the flow of the heat medium using the projection is set to work more intensely in a region located on a more downstream side.

According to the cooling heat exchanger structured following the present preferred embodiment, the action of disturbing the flow of the heat medium using the projection is set to work more intensely on the downstream side than on an upstream side. Thus, in a downstream-side region in the parallel flow path unit where a large temperature difference is likely to occur between the heat medium flowing through a position closer to the cooling target and the heat medium flowing through a position farther from the cooling target as a result of heat exchange with the cooling target, uniformity in temperature is encouraged by stirring action resulting from a turbulence in the flow of the heat medium.

According to a fourth preferred embodiment, in the cooling heat exchanger according to any one of the first to third preferred embodiments, the projection is provided over an entire flow path width of the flow path part forming the parallel flow path unit, and a narrow flow path portion for causing the heat medium to flow therein is provided on a jutting tip side of the projection.

According to the cooling heat exchanger structured following the present preferred embodiment, the heat medium flows in the narrow flow path portion while climbing over the projection, thereby fulfilling the action of disturbing the flow of the heat medium using the projection effectively. In particular, a vortex flow is generated easily in the heat medium when the heat medium climbs over the projection. Thus, if a temperature difference of the heat medium is generated in a jutting direction of the projection, for example, uniformity in temperature of the heat medium is encouraged efficiently by the vortex flow.

As the flow path sectional area of the flow path part is reduced partially at the narrow flow path portion, the heat medium is increased in flow velocity in flowing through the narrow flow path portion, making it possible to more efficiently achieve the action of disturbing the flow of the heat medium.

According to a fifth preferred embodiment, in the cooling heat exchanger according to the fourth preferred embodiment, a plurality of the narrow flow path portions is formed by the plurality of projections, and at least one of the plurality of narrow flow path portions differs in a flow path sectional area than the other narrow flow path portion.

According to the cooling heat exchanger structured following the present preferred embodiment, it is possible to adjust the flow velocity of the heat medium flowing through the narrow flow path portion on the basis of a difference in flow path sectional area between the narrow flow path portions. Thus, by reducing the flow path sectional area of the narrow flow path portion partially to increase a flow velocity, for example, it becomes possible to more intensely achieve the action of disturbing the flow of the heat medium using the projection.

According to a sixth preferred embodiment, in the cooling heat exchanger according to the fifth preferred embodiment, flow path sectional areas of the plurality of narrow flow path portions provided in one of the flow path parts become smaller from an upstream side toward a downstream side.

According to the cooling heat exchanger structured following the present preferred embodiment, the action of disturbing the flow of the heat medium using the heat medium having passed through the narrow flow path portion works effectively on the downstream side.

According to a seventh preferred embodiment, in the cooling heat exchanger according to any one of the first to sixth preferred embodiments, the projection is provided partially in the parallel flow path unit, and a region with the projection and a region without the projection constitute the regions where the action of disturbing the flow of the heat medium works differently.

According to the cooling heat exchanger structured following the present preferred embodiment, the regions where the action of disturbing the flow of the heat medium works differently are defined on the basis of the presence or absence of the projection, making it possible to generate a larger difference in the action of disturbing the flow of the heat medium. Thus, it is possible to effectively define each of a region where reduction in temperature non-uniformity is encouraged by disturbing the flow of the heat medium and a region where smooth flow of the heat medium is encouraged.

According to an eighth preferred embodiment, the cooling heat exchanger according to any one of the first to seventh preferred embodiments comprises a stacked structure where a cooling surface constituent member forming the cooling surface is superposed on a flow path member provided with a recessed groove, wherein the recessed groove at the flow path member is covered by the cooling surface constituent member to form the cooling surface flow path, and the plurality of projections juts out from the flow path member toward the cooling surface constituent member.

According to the cooling heat exchanger structured following the present preferred embodiment, it is possible to easily form the jutting projection at the flow path part in the parallel flow path unit, for example. In particular, as a result of the structure where the cooling surface constituent member including the cooling surface and the flow path member including the projection are provided as separate members and superposed on each other, it is also possible to form the cooling surface constituent member using a material having high heat conductivity and form the flow path member using a material providing excellent formability of the recessed groove or the projection, for example.

According to a ninth preferred embodiment, in the cooling heat exchanger according to any one of the first to eighth preferred embodiments, the regions where the action of disturbing the flow of the heat medium works differently are defined in at least one pair of the flow path parts next to each other in the parallel flow path unit.

According to the cooling heat exchanger structured following the present preferred embodiment, if the amount of heat to be generated partially differs in the cooling target to be arranged by being superposed on the parallel flow path unit, for example, a turbulence in the flow of the heat medium generated by the projection is set intensely in an area where the amount of heat to be generated by the cooling target is large, and a turbulence in the flow of the heat medium generated by the projection is set weakly in an area where the amount of heat to be generated by the cooling target is small. This makes it possible to encourage stabilization of cooling performance.

According to a tenth preferred embodiment, in the cooling heat exchanger according to any one of the first to ninth preferred embodiments, the cooling target is a battery.

According to the cooling heat exchanger structured following the present preferred embodiment, in cooling the battery where local temperature increase is likely to occur in an output terminal part, for example, the regions where the action of disturbing the flow of the heat medium using the projection works differently are defined in response to a way in which the battery generates heat, making it possible to realize efficient cooling.

According to an eleventh preferred embodiment, in the cooling heat exchanger according to any one of the first to tenth preferred embodiments, the regions where the action of disturbing the flow of the heat medium works differently are defined by a difference in a gap between the plurality of projections in the flow direction of the heat medium.

According to the cooling heat exchanger structured following the present preferred embodiment, it is possible to define a region where the action of disturbing the flow of the heat medium (turbulent flow facilitating action) works intensely by narrowing the gap between the projections, and to define a region where the turbulent flow facilitating action works weakly by widening the gap between the projections, for example. By using such a difference in gap between the projections in this way, it becomes possible to easily define the regions where the action of disturbing the flow of the heat medium works differently.

According to a twelfth preferred embodiment, in the cooling heat exchanger according to the eleventh preferred embodiment, the gap between the plurality of projections aligned in a flow path length direction in the flow path part becomes narrower toward a downstream side, and the regions where the action of disturbing the flow of the heat medium works differently are defined in the flow path length direction of the flow path part.

According to the cooling heat exchanger structured following the present preferred embodiment, by making the gap between the projections aligned in the flow path length direction narrower toward the downstream side, it becomes possible to fulfill the action of disturbing the flow of the heat medium using the projection more intensely on the downstream side. Thus, the effect of improving cooling performance using the projection is achieved more advantageously on the downstream side likely to be brought to high temperature through heat exchange with the cooling target.

According to a thirteenth preferred embodiment, in the cooling heat exchanger according to any one of the first to twelfth preferred embodiments, the regions where the action of disturbing the flow of the heat medium works differently are defined by a difference in height between the plurality of projections.

According to the cooling heat exchanger structured following the present preferred embodiment, it is possible to define a region where the action of disturbing the flow of the heat medium (turbulent flow facilitating action) works intensely by increasing the height of the projection partially, and to define a region where the turbulent flow facilitating action works weakly by reducing the height of the projection partially, for example. By using such a difference in height between the projections in this way, it becomes possible to easily define the regions where the action of disturbing the flow of the heat medium works differently.

According to a fourteenth preferred embodiment, in the cooling heat exchanger according to the thirteenth preferred embodiment, the heights of the plurality of projections aligned in a flow path length direction in the flow path part become larger toward a downstream side, and the regions where the action of disturbing the flow of the heat medium works differently are defined in the flow path length direction of the flow path part.

According to the cooling heat exchanger structured following the present preferred embodiment, by increasing the height of the projection toward the downstream side, it becomes possible to fulfill the action of disturbing the flow of the heat medium using the projection more intensely on the downstream side. Thus, the effect of improving cooling performance using the projection is achieved more advantageously on the downstream side likely to be brought to high temperature through heat exchange with the cooling target.

According to a fifteenth preferred embodiment, in the cooling heat exchanger according to any one of the first to fourteenth preferred embodiments, the plurality of flow path parts in the parallel flow path unit is provided with the plurality of projections aligned in the flow direction of the heat medium, an upstream-side side surface of the projection is defined as a first inclined surface and the jutting height of the projection on the first inclined surface becomes larger from an upstream side toward a downstream side, and a downstream-side side surface of the projection is defined as a second inclined surface and the jutting height of the projection on the second inclined surface becomes smaller from the upstream side toward the downstream side.

According to the cooling heat exchanger structured following the present preferred embodiment, by defining the upstream-side side surface of the projection as the first inclined surface, the heat medium is guided along the first inclined surface to flow easily while climbing over the projection. In the flow of the heat medium having climbed over the projection, a vortex flow is generated easily on the second inclined surface. By doing so, the heat medium is stirred to reduce a temperature difference of the heat medium. As a result, only the heat medium flowing through a position near the cooling target is prevented from being brought to excessively high temperature while a temperature difference is ensured between the cooling target and the heat medium flowing through the position near the cooling target, thereby encouraging improvement in cooling performance.

As the flow path sectional area of the flow path part becomes smaller toward the downstream side, the heat medium on the first inclined surface flows at a higher flow velocity toward the downstream side. Thus, on the downstream side with respect to the first inclined surface, the heat medium flowing into the second inclined surface at a high flow velocity generates a vortex flow more efficiently, thereby more advantageously achieving temperature uniformity by stirring of the heat medium.

According to a sixteenth preferred embodiment, in the cooling heat exchanger according to the fifteenth preferred embodiment, an inclination angle of the first inclined surface is smaller than an inclination angle of the second inclined surface.

According to the cooling heat exchanger structured following the present preferred embodiment, the heat medium flows easily along the first inclined surface having the small inclination angle, thereby allowing a flow of the heat medium in climbing over the projection to be generated smoothly with small pressure loss. Furthermore, by setting the inclination angle of the second inclined surface larger than the inclination angle of the first inclined surface, it becomes unlikely that formation of a vertical vortex by the heat medium having climbed over the projection will be hindered on the second inclined surface. Thus, the action of stirring the heat medium can be achieved advantageously using the vertical vortex.

According to a seventeenth preferred embodiment, in the cooling heat exchanger according to any one of the first to sixteenth preferred embodiments, the projection has a ridge line extending in an inclined pattern from a flow path length direction of the flow path part.

The heat medium flowing in the flow path part climbs over the projection in a direction substantially orthogonal to the ridge line of the projection. Thus, in the cooling heat exchanger according to the present preferred embodiment where the ridge line of the projection extends in an inclined pattern from the flow path length direction of the flow path part corresponding to the flow direction of the heat medium in the flow path part, the flow direction of the heat medium in climbing over the projection easily conforms to a direction inclined from the flow path length direction of the flow path part. As a result, change in a direction is generated easily in the flow of the projection having climbed over the projection, making it possible to more efficiently generate a turbulence in the flow of the heat medium.

According to an eighteenth preferred embodiment, in the cooling heat exchanger according to the seventeenth preferred embodiment, the projection extends in a V shape inclined in the flow path length direction toward both sides in a flow path width direction of the flow path part.

According to the cooling heat exchanger structured following the present preferred embodiment, the projection has ridge lines inclined in directions differing from each other and provided on the both sides in the flow path width direction. Thus, the heat medium is stirred efficiently by the flow of the heat medium in climbing over each of the ridge lines, thereby more advantageously encouraging improvement in cooling performance by the stirring action.

According to a nineteenth preferred embodiment, in the cooling heat exchanger according to the eighteenth preferred embodiment, the projection has a V shape extending toward the both sides in the flow path width direction of the flow path part and inclined toward a downstream side of the cooling flow path.

According to the cooling heat exchanger structured following the present preferred embodiment, the projection has the V shape extending toward the both sides in the flow path width direction and inclined toward the downstream side. Thus, flows of the heat medium having climbed over the respective ridge lines of the projection flow internally of the flow path width direction to join each other on a downstream side with respect to the projection. Thus, generation of a vortex flow can also be expected, making it possible to encourage further improvement in the stirring action.

According to a twentieth preferred embodiment, in the cooling heat exchanger according to any one of the first to nineteenth preferred embodiments, the projection is provided only in a center part in a flow path length direction of the flow path part.

According to the cooling heat exchanger structured following the present preferred embodiment, if the cooling target is to generate heat at a location corresponding to the center part in the flow path length direction, it is possible to cool the location of heat generation efficiently by improving cooling performance partially using the projection provided only in the center part in the flow path length direction. The center part in the flow path length direction of the flow path part is at a position farther from outside air than both ends in the flow path length direction. Thus, while it is difficult to expect cooling of the heat medium through heat exchange with outside air in the center part, it is still possible to fulfill cooling performance effectively even in the center part by the action of stirring the heat medium using the projection.

According to a twenty-first preferred embodiment, in the cooling heat exchanger according to any one of the first to twentieth preferred embodiments, the projection is provided only in the flow path part forming a center part in a flow path width direction of the parallel flow path unit.

According to the cooling heat exchanger structured following the present preferred embodiment, if the cooling target is to generate heat at a location corresponding to the center part in the flow path width direction, it is possible to cool the location of heat generation efficiently by improving cooling performance partially using the projection provided only in the center part in the flow path width direction. The center part in the flow path width direction of the flow path part is at a position farther from outside air than both ends in the flow path width direction. Thus, while it is difficult to expect cooling of the heat medium through heat exchange with outside air in the center part, it is still possible to fulfill cooling performance effectively even in the center part by the action of stirring the heat medium using the projection.

According to a twenty-second preferred embodiment, in the cooling heat exchanger according to any one of the first to twenty-first preferred embodiments, the flow path part is provided with the plurality of projections aligned in a flow path length direction of the flow path part, and a gap between the projections located in a center part in the flow path length direction of the flow path part is narrower than a gap between the projections located on each of both sides in the flow path length direction of the flow path part.

According to the cooling heat exchanger structured following the present preferred embodiment, in the flow path part with the plurality of projections aligned in the flow path length direction, a gap between the projections next to each other becomes narrower toward the center of a part where these projections are provided. By doing so, it becomes possible to fulfill the effect of improving cooling performance based on the action of stirring the heat medium using the projection more advantageously toward the center of the part where these projections are provided.

According to a twenty-third preferred embodiment, in the cooling heat exchanger according to any one of the first to twenty-second preferred embodiments, the projection has a width dimension in a flow path width direction of the flow path part that is equal to or greater than 50% of the flow path width dimension of the flow path part.

According to the cooling heat exchanger structured following the present preferred embodiment, the width dimension of the projection is sufficiently large with respect to the flow path width dimension of the flow path part. Thus, a flow bypassing the projection is restricted to generate a flow of climbing over the projection easily. As a result, the action of stirring the heat medium using the projection works effectively, thereby encouraging improvement in cooling performance by the provision of the projection.

According to a twenty-fourth preferred embodiment, in the cooling heat exchanger according to any one of the first to twenty-third preferred embodiments, the flow path width dimension of the flow path part is within a range from 0.3 to 30 times a width dimension of a partition wall making separation between the flow path parts next to each other.

According to the cooling heat exchanger structured following the present preferred embodiment, setting the flow path width dimension of the flow path part equal to or greater than 0.3 times the width dimension of the partition wall makes it possible to cool the cooling surface efficiently using the flow path part having a wide area in the parallel flow path unit, thereby encouraging improvement in cooling performance. Furthermore, setting the flow path width dimension of the flow path part equal to or less than 30 times the width dimension of the partition wall makes it possible to ensure the width dimensions of the partition wall sufficiently. This achieves improvement in stiffness against deformation of the cooling heat exchanger and encourages stabilization of the shape of the flow path part. Moreover, if the cooling heat exchanger has a structure where a member including the partition wall and a member including the cooling surface are superposed on and fixed to each other, for example, ensuring the width dimension of the partition wall makes it possible to obtain a large area of the fixation between the two members. This reduces the occurrence of a situation such as separation between the two members by the liquid pressure of the heat medium.

According to a twenty-fifth preferred embodiment, in the cooling heat exchanger according to any one of the first to twenty-fourth preferred embodiments, a jutting height dimension of the projection is within a range from 0.1 to 1.3 times a width dimension of the projection.

According to the cooling heat exchanger structured following the present preferred embodiment, setting the jutting height dimension of the projection equal to or greater than 0.1 times the width dimension of the projection makes it possible to achieve the action of stirring the heat medium effectively using the flow of the heat medium in climbing over the projection. Furthermore, setting the jutting height dimension of the projection equal to or less than 1.3 times the width dimension of the projection makes it possible to prevent the flow of the heat medium in the flow path part from being restricted excessively by the projection, thereby realizing smooth flow of the heat medium.

According to a twenty-sixth preferred embodiment, in the cooling heat exchanger according to any one of the first to twenty-fifth preferred embodiments, the flow path part is provided with a laminar flow part without the projection, and a flow path sectional area of the flow path part in the laminar flow part becomes smaller toward a downstream side.

According to the cooling heat exchanger structured following the present preferred embodiment, smooth flow of the heat medium is realized in the laminar flow part without the projection. Furthermore, by making the flow path sectional area of the flow path part in the laminar flow part smaller toward the downstream side, reduction in a flow velocity is suppressed on the downstream side.

According to a twenty-seventh preferred embodiment, in the cooling heat exchanger according to the twenty-sixth preferred embodiment, a flow path length of the laminar flow part is shorter than a flow path length of a turbulent flow part with the projection defined in a part different from the laminar flow part.

According to the cooling heat exchanger structured following the present preferred embodiment, the projections are formed in a wider range in the flow path length direction of the flow path part, thereby encouraging improvement in cooling performance using the projection.

According to a twenty-eighth preferred embodiment, in the cooling heat exchanger according to the twenty-sixth or twenty-seventh preferred embodiment, in the turbulent flow part with the projection defined in the part of the flow path part different from the laminar flow part, a part except the projection has a constant section.

According to the cooling heat exchanger structured following the present preferred embodiment, the turbulent flow part has a constant section in the part except the projection to suppress change in flow velocity, etc. in the part except the projection in the turbulent flow part. This allows the stirring action using the projection to be controlled easily using the height or shape of the projection, arrangement pitch of the projections, etc., for example.

According to a twenty-ninth preferred embodiment, in the cooling heat exchanger according to any one of the first to twenty-eighth preferred embodiments, an inlet-side flow path part is provided on an upstream side of the parallel flow path unit and causes the plurality of flow path parts to branch and extend downstream from the inlet-side flow path part, an outlet-side flow path part is provided on a downstream side of the parallel flow path unit and causes the plurality of flow path parts to join each other, and the inlet-side flow path part has a larger capacity than the outlet-side flow path part.

According to the cooling heat exchanger structured following the present preferred embodiment, the capacity of the inlet-side flow path part forming the upstream side is larger than the capacity of the outlet-side flow path part forming the downstream side of the cooling flow path. Thus, by reducing the flow path sectional area of the flow path part toward the downstream side that forms the parallel flow path unit connecting the inlet-side flow path part and the outlet-side flow path part to each other, for example, it also becomes possible to suppress reduction in the flow velocity of the heat medium on the downstream side of the flow path part.

According to a thirtieth preferred embodiment, in the cooling heat exchanger according to any one of the first to twenty-ninth preferred embodiments, a jutting height of the projection changes in a flow path width direction of the flow path part, one of a low jutting portion having a small jutting height and a high jutting portion having a large jutting height is located in a center part in the flow path width direction of the projection, and the other of the low jutting portion having a small jutting height and the high jutting portion having a large jutting height is located on each of both ends in the flow path width direction of the projection.

According to the cooling heat exchanger structured following the present preferred embodiment, it is possible to generate a difference in stirring action, flow velocity, etc. between a flow of the heat medium flowing while climbing over the center part in the flow path width direction of the projection and a flow of the heat medium flowing while climbing over each of the both ends in the flow path width direction of the projection. Thus, a difference can be generated in terms of influence by the projection over cooling performance between the center part and the both ends in the flow path width direction, thereby allowing cooling performance to be regulated in the flow path width direction.

According to a thirty-first preferred embodiment, in the cooling heat exchanger according to the thirtieth preferred embodiment, the flow path part is provided with the plurality of projections aligned in a flow path length direction of the flow path part, the plurality of projections includes a first projection and a second projection arranged alternately in the flow path length direction of the flow path part, the first projection including the low jutting portion defined in the center part and the high jutting portion defined in each of the both ends in the flow path width direction of the flow path part, the second projection including the high jutting portion defined in the center part and the low jutting portion defined in each of the both ends in the flow path width direction of the flow path part.

According to the cooling heat exchanger structured following the present preferred embodiment, as a result of the alternate arrangement in the flow path length direction with the first projection including the low jutting portion defined in the center part in the flow path width direction and the second projection including the low jutting portion defined in each of the both ends in the flow path width direction, the low jutting portions where a flow resistance is suppressed easily are linked by a flow of the heat medium flowing in a meandering pattern in the flow path width direction, for example. This allows the action of stirring the heat medium to work in the flow path width direction. Moreover, by causing the heat medium having passed through the low jutting portion of one projection to flow toward the high jutting portion of a next projection, for example, the heat medium having passed through the low jutting portion smoothly at a comparatively low flow resistance collides with the high jutting portion. This further encourages expectation for efficient stirring of the heat medium.

According to a thirty-second preferred embodiment, in the cooling heat exchanger according to any one of the first to thirty-first preferred embodiments, the projection has a sectional shape tapered toward a jutting tip in a section in a flow path length direction of the flow path part, and the projection includes an arc-like projection apex, an upstream inclined part, and a downstream inclined part provided smoothly and continuously with each other without forming an edge, the upstream inclined part extending from the projection apex toward a projection base on the side of a bottom surface of the flow path part in an inclined pattern toward an upstream side of the flow path part, the downstream inclined part extending from the projection apex toward the projection base in an inclined pattern toward a downstream side.

According to the cooling heat exchanger structured following the present preferred embodiment, the projection has a smooth and continuous surface in the section in the flow path length direction. This smoothly generates a flow of the heat medium in climbing over the projection.

According to a thirty-third preferred embodiment, in the cooling heat exchanger according to the thirty-second preferred embodiment, in the section in the flow path length direction of the flow path part, the projection apex has a radius of curvature within a range from 0.05 to 1.5 times a length dimension of the projection base, and in the section in the flow path length direction of the flow path part, an inclination angle of the upstream inclined part with respect to the bottom surface of the flow path part is within a range from 20 to 70°.

According to the cooling heat exchanger structured following the present preferred embodiment, by setting the radius of curvature of the projection apex equal to or greater than 0.05 times the length dimension of the projection base, the projection apex is formed into a section having a smooth arc pattern without forming a substantial edge. Furthermore, by setting the radius of curvature of the projection apex equal to or less than 1.5 times the length dimension of the projection base, it becomes possible to prevent the length dimension of the projection from increasing excessively in the flow path length direction and also possible to set the inclination angle with respect to the bottom surface sufficiently large for each of the upstream inclined part and the downstream inclined part smoothly continuous with the projection apex.

By setting the inclination angle of the upstream inclined part with respect to the bottom surface of the flow path part equal to or greater than 20°, a flow of the heat medium from the upstream side toward the projection is disturbed effectively by the upstream inclined part, thereby encouraging improvement in cooling performance by the stirring action. Furthermore, by setting the inclination angle of the upstream inclined part with respect to the bottom surface of the flow path part equal to or less than 70°, it becomes possible to prevent the flow of the heat medium from being restricted excessively by the projection.

According to a thirty-fourth preferred embodiment, in the cooling heat exchanger according to the thirty-second preferred embodiment, in the section in the flow path length direction of the flow path part, an inclination angle of the upstream inclined part with respect to the bottom surface of the flow path part is equal to or less than 25°.

According to the cooling heat exchanger structured following the present preferred embodiment, setting the inclination angle of the upstream inclined part with respect to the bottom surface of the flow path part equal to or less than 25° allow pressure loss to be set sufficiently small. Thus, it becomes possible to cause the heat medium to flow using an inexpensive pump having lower performance, for example.

According to a thirty-fifth preferred embodiment, in the cooling heat exchanger according to any one of the first to thirty-fourth preferred embodiments, the projection extends over an entire flow path width of the flow path part and is continuous with a side wall of the flow path part at each of both ends of the projection.

According to the cooling heat exchanger structured following the present preferred embodiment, it is possible to prevent the heat medium from bypassing the projection and flowing between the side wall of the flow path part and the projection, thereby encouraging efficient improvement in cooling performance. If the projection is separated from the side wall of the flow path part, the flow velocity of the heat medium flowing between the side wall of the flow path part and the projection is increased easily, causing the risk of erosion of the side wall of the flow path part or the projection. By contrast, in the cooling heat exchanger of the present preferred embodiment, the projection extends over the entire flow path width of the flow path part and is continuous with the side wall of the flow path part. This can prevent the flow of the heat medium between the side wall of the flow path part and the projection, so that erosion of the wall of the flow path part or the projection due to the flow at high velocity can be prevented.

A thirty-sixth preferred embodiment is intended for a method of regulating cooling action in a cooling heat exchanger , the cooling heat exchanger including: a cooling surface configured to be superposed on a cooling target; and a cooling flow path for causing a cooling heat medium to flow therein, the cooling flow path including a parallel flow path unit composed of a plurality of flow path parts extending in parallel and next to each other and causing the heat medium to flow in the same direction between the plurality of flow path parts, the method comprising: regulating efficiency in cooling using the heat medium in a particular region where the flow of the heat medium is disturbed by changing a sectional shape of the flow path part in the parallel flow path unit, by defining the particular region in a different way from another region.

According to the method of regulating the cooling action in the cooling heat exchanger structured following the present preferred embodiment, while advantages achieved by the parallel flow path unit are enjoyed such as improvement in cooling performance resulting from substantial width increase of the cooling flow path and improvement in controllability over the flow of the heat medium, it is possible to easily regulate cooling efficiency in each region in the wide cooling surface provided by the parallel flow path unit. By locating the particular region regulated in efficiency in cooling using the heat medium at a position corresponding to a part of the cooling target where a large amount of heat is to be generated, for example, it becomes possible to cool the cooling target effectively and efficiently over a wide range.

### EFFECT OF THE INVENTION

According to the present invention, it is possible for the cooling heat exchanger to fulfill cooling performance more efficiently.

### BRIEF DESCRIPTION OF THE DRAWINGS

FIG. 1 is an exploded perspective view depicting a cooling heat exchanger according to a first practical embodiment of the present invention.
FIG. 2 is a sectional view of the cooling heat exchanger depicted in FIG. 1 and is a view corresponding to a section along 2-2 in FIG. 4.
FIG. 3 is a sectional view along 3-3 in FIG. 2.
FIG. 4 is a sectional view along 4-4 in FIG. 2.
FIG. 5 is an enlarged sectional view of a projection provided in the cooling heat exchanger depicted in FIG. 1.
FIG. 6 is a perspective view showing a state where the cooling heat exchanger in FIG. 1 is mounted with battery packs.
FIG. 7 is a view depicting a temperature distribution of a heat medium in a flow path part in the cooling heat exchanger in FIG. 1.
FIG. 8 is a sectional view of a cooling heat exchanger according to a second preferred embodiment of the present invention.
FIG. 9 is an exploded perspective view of a cooling heat exchanger according to a third preferred embodiment of the present invention.
FIG. 10 is a sectional view of the cooling heat exchanger depicted in FIG. 9.
FIG. 11 is a sectional view of a cooling heat exchanger according to a fourth preferred embodiment of the present invention.
FIG. 12 is a sectional view of a cooling heat exchanger according to a fifth preferred embodiment of the present invention.
FIG. 13 is a sectional view of a cooling heat exchanger according to a sixth preferred embodiment of the present invention.
FIG. 14 is a sectional view of a cooling heat exchanger according to a seventh preferred embodiment of the present invention and is a view corresponding to a section along 14-14 in FIG. 15.
FIG. 15 is a sectional view of the cooling heat exchanger depicted in FIG. 14 and is a view partially depicting a section along 15-15 in FIG. 14.
FIG. 16 is a principal sectional view of a cooling heat exchanger according to an eighth preferred embodiment of the present invention.
FIG. 17 is another principal sectional view of the cooling heat exchanger depicted in FIG. 16.
FIG. 18 is a principal sectional view of a cooling heat exchanger according to another preferred embodiment of the present invention.

### EMBODIMENTS FOR CARRYING OUT THE INVENTION

Hereinafter, practical embodiments of the present invention will be described in reference to the drawings.

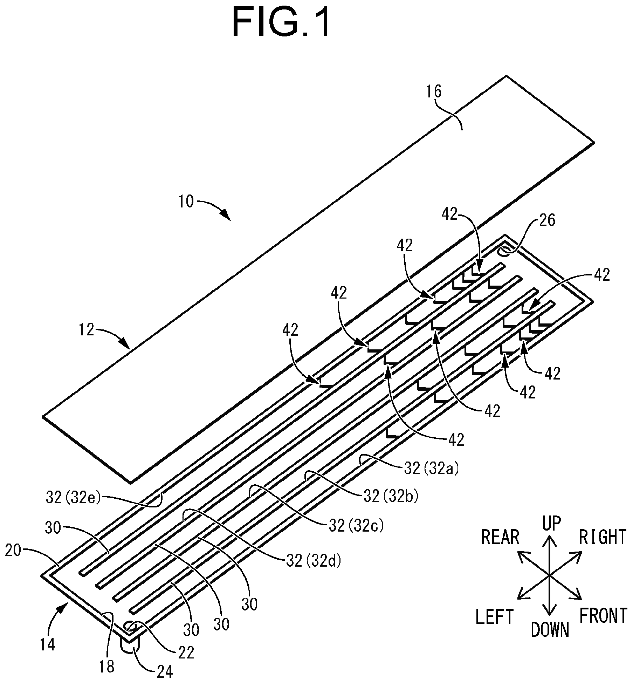

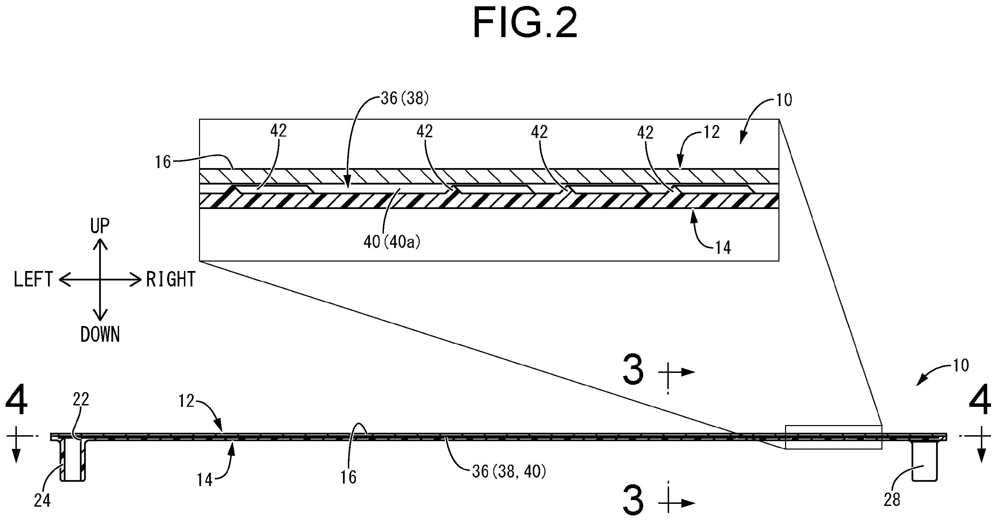

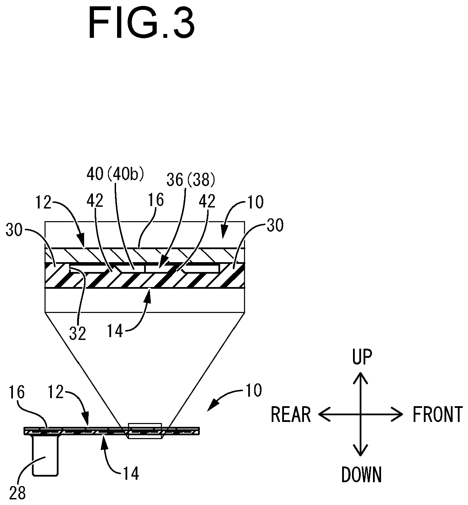

FIGS. 1 to 3 depict a cooling heat exchanger 10 according to a first practical embodiment of the present invention. The cooling heat exchanger 10 has a stacked structure where a cooling surface constituent member 12 and a flow path member 14 are superposed on each other. In the following description, in principle, a top-bottom direction refers to a direction from top to bottom in FIG. 2, which is a direction of superposing the cooling surface constituent member 12 and the flow path member 14, a front-rear direction refers to a direction from right to left in FIG. 3, which is a direction of alignment of a plurality of flow path parts 40 described later, and a right-left direction refers to a direction from right to left in FIG. 2, which is a flow path length direction of the flow path part 40. In the present practical embodiment, an upstream side of the flow path part 40 is defined on a left side in FIG. 2 and a downstream side thereof is defined on a right side in FIG. 2, and a heat medium flows from left toward right.

The cooling surface constituent member 12 has a substantially rectangular flat plate shape, and has a length dimension in the right-left direction longer than a width dimension in the front-rear direction. The cooling surface constituent member 12 is made of a material having high heat conductivity, and is made of metal, or heat-conductive synthetic resin blended with a heat-conductive filler, for example. Preferably, the cooling surface constituent member 12 is made of metal having high heat conductivity, and is made of a metallic material such as an aluminum alloy, iron, stainless steel, or copper, for example. The cooling surface constituent member 12 of the present practical embodiment has an upper surface functioning as a cooling surface 16 to be superposed substantially entirely on a plurality of battery packs 52 described later.

The flow path member 14 has a substantially rectangular flat plate shape as a whole, has a planar shape substantially conforming to that of the cooling surface constituent member 12, and has an outer dimension in a plan view substantially equal to that of the cooling surface constituent member 12. As an example, the flow path member 14 may be made of metal such as an aluminum alloy or stainless steel, or may be made of synthetic resin such as polypropylene, polyethylene, polycarbonate, or polyamide. Using the synthetic resin for forming the flow path member 14 makes it possible to expect weight reduction of the cooling heat exchanger 10, facilitation of formation of a recessed part 18 (recessed groove 32) or a projection 42 described later, a higher degree of freedom and improved accuracy of the shape of the recessed part 18 (recessed groove 32) or the projection 42 described later, etc.

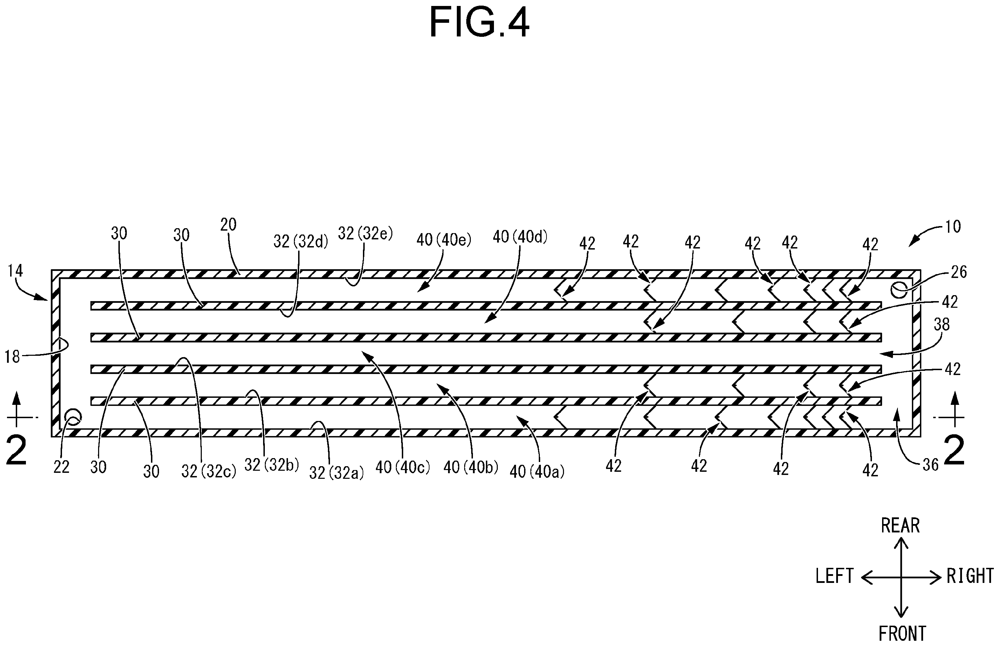

As depicted in FIG. 4, the flow path member 14 includes the recessed part 18 opened at an upper surface thereof. The recessed part 18 of the present practical embodiment is rectangular in a plan view of FIG. 4. An outer peripheral fixed part 20 having a substantially rectangular annular shape protruding more upward than a bottom surface of the recessed part 18 is provided around the recessed part 18 in such a way as to extend continuously along an entire periphery.

A supply hole 22 penetrating the recessed part 18 in the top-bottom direction is formed at a front end portion of the recessed part 18, and a cylindrical supply port 24 protruding downward from around the supply hole 22 is provided. The supply hole 22 of the present practical embodiment is provided at a front left corner of the recessed part 18. A discharge hole 26 penetrating the recessed part 18 in the top-bottom direction is formed at a rear end portion of the recessed part 18, and a cylindrical discharge port 28 protruding downward from around the discharge hole 26 is provided. The discharge hole 26 of the present practical embodiment is provided at a rear right corner of the recessed part 18. Thus, the supply hole 22 and the discharge hole 26 are located on corresponding sides in a diagonal direction of the recessed part 18 having the substantially rectangular shape in a plan view.

The recessed part 18 is provided with a plurality of inner peripheral fixed parts 30 protruding upward from the bottom surface of the recessed part 18. The inner peripheral fixed part 30 extends linearly in the right-left direction, and has both ends separated inward in the right-left direction from the outer peripheral fixed part 20. In the present practical embodiment, four inner peripheral fixed parts 30, 30, 30, 30 are provided separately from each other in the front-rear direction. A distance between the inner peripheral fixed parts 30, 30 next to each other in the front-rear direction is substantially constant. Moreover, a separation distance between each of the inner peripheral fixed parts 30 at the corresponding front and rear ends and the outer peripheral fixed part 20 in the front-rear direction is substantially equal to the distance between the inner peripheral fixed parts 30, 30 next to each other in the front-rear direction. By the formation of the described inner peripheral fixed parts 30, 30, 30, 30, the recessed part 18 is partitioned in a middle area in the right-left direction into five recessed grooves 32a, 32b, 32c, 32d, and 32e extending linearly in the right-left direction. Preferably, the width dimension of the inner peripheral fixed part 30 is equal to or less than 4 mm. By doing so, the width dimension of a wall making separation between the recessed grooves 32, 32 next to each other is preferably equal to or less than 4 mm. Right and left end portions of the recessed part 18 are defined continuously in the front-rear direction without being partitioned by the inner peripheral fixed parts 30, 30, 30, 30. The supply hole 22 and the discharge hole 26 are provided at the corresponding right and left end portions of the recessed part 18 defined continuously in the front-rear direction.

The cooling surface constituent member 12 is superposed on the flow path member 14 from above. The cooling surface constituent member 12 is superposed on the flow path member 14 in an abutting contact with the flow path member 14 at the outer peripheral fixed part 20 and the inner peripheral fixed parts 30, 30, 30, 30, and are fixed to the flow path member 14 at the outer peripheral fixed part 20 and the inner peripheral fixed parts 30, 30, 30, 30. The cooling surface constituent member 12 may be fixed to the outer peripheral fixed part 20 and the inner peripheral fixed parts 30, 30, 30, 30 of the flow path member 14 by publicly-known conventional means such as adhesion using an adhesive agent, bonding, welding, or brazing. In the present practical embodiment, the cooling surface constituent member 12 and the flow path member 14 are fixed to each other in an abutting contact therebetween at the inner peripheral fixed part 30 in an inner peripheral area. Thus, even if the liquid pressure of the heat medium acts in a direction of separating the cooling surface constituent member 12 and the flow path member 14 from each other in the top-bottom direction, for example, separation between the cooling surface constituent member 12 and the flow path member 14 or deformation of these members is still prevented. The cooling surface constituent member 12 can be fixed to the flow path member 14 by means such as mechanical latch using a hook or swaging, for example. In this case, to ensure liquid tightness between a superposed surface of the cooling surface constituent member 12 and respective superposed surfaces of the outer peripheral fixed part 20 and the inner peripheral fixed parts 30, 30, 30, 30, a sealing member such as sealing rubber is desirably arranged between the superposed surface of the cooling surface constituent member 12 and the respective superposed surfaces of the outer peripheral fixed part 20 and the inner peripheral fixed parts 30, 30, 30, 30.

The cooling surface constituent member 12 mounted on the flow path member 14 is separated upward from the bottom surface of the recessed part 18. By doing so, a cooling flow path 36 defined by the recessed part 18 is formed between the respective superposed surfaces of the cooling surface constituent member 12 and the flow path member 14. The cooling flow path 36 is a flow path provided inside the cooling heat exchanger 10 and for causing the cooling heat medium to flow therein. The cooling flow path 36 is a flow path connecting the supply hole 22 and the discharge hole 26 to each other, and is connected via the supply port 24 and the discharge port 28 to an external flow path not depicted in the drawings. After the heat medium flows into the cooling flow path 36 from the external flow path via the supply hole 22, the heat medium flows from left to right and is discharged to the external flow path from the cooling flow path 36 via the discharge hole 26. The external flow path is provided with a cooling unit for cooling the heat medium that may be an air-cooling unit such as a radiator or a refrigerator or a liquid-cooling unit, for example. The heat medium at low temperature cooled by the cooling unit is supplied to the cooling flow path 36.

The cooling flow path 36 includes a parallel flow path unit 38. The parallel flow path unit 38 is a unit provided with the plurality of flow path parts 40 arranged in parallel and next to each other where the heat medium flows in the same direction, as described later. In the present practical embodiment, upper openings of the five recessed grooves 32a, 32b, 32c, 32d, and 32e are covered by the cooling surface constituent member 12, thereby providing the parallel flow path unit 38 composed of five flow path parts 40a, 40b, 40c, 40d, and 40e in a middle area of the cooling flow path 36. The parallel flow path unit 38 is provided substantially parallel to the cooling surface 16 in a part except the projection 42 described later.

The five flow path parts 40a to 40e have substantially constant sectional shapes and sectional areas. Regarding a route length along the cooling flow path 36 from the supply hole 22 to the discharge hole 26, as the supply hole 22 and the discharge hole 26 are located at diagonal positions, all routes passing through the five flow path parts 40a to 40e have substantially equal lengths.

Regarding a flow direction of the heat medium flowing in the cooling flow path 36, the heat medium flows in the same direction between the five flow path parts 40a to 40e of the parallel flow path unit 38. By doing so, when the heat medium flows in the flow path parts 40a to 40e while receiving heat from the battery pack 52 described later 52, a difference in temperature of the heat medium flowing in the flow path parts 40a to 40e is small, thereby suppressing heat exchange of the heat medium between the flow path parts 40a to 40e. Thus, on an upstream side of the parallel flow path unit 38, temperature change of the heat medium resulting from heat exchange is prevented to bring the heat medium at low temperature between the flow path parts 40a to 40e.

The inner peripheral fixed part 30 making separation between the flow path parts 40, 40 next to each other in the front-rear direction has a small width dimension in the front-rear direction that is equal to or less than 4 mm. In a right-left center part of the cooling heat exchanger 10 where the parallel flow path unit 38 is provided, large projected areas in the top-bottom direction are ensured for the flow path parts 40a to 40e. This makes it possible to encourage reduction in flow resistance of the heat medium in each flow path part 40. This also brings the cooling surface constituent member 12 into direct contact with the heat medium in a larger area, thereby allowing the cooling surface 16 to be cooled efficiently. The heat medium flows in the same direction between the flow path parts 40a to 40e. Thus, even if a distance is shortened between the flow path parts 40, 40 next to each other, temperature increase of the heat medium resulting from heat exchange between these flow path parts 40, 40 does not cause a problem.

The flow path width dimension of the flow path part 40 is preferably within a range from 0.3 to 30 times, more preferably, within a range from 0.5 to 20 times the width dimension of the inner peripheral fixed part 30 as a partition wall making separation between the flow path parts 40, 40 next to each other. By doing so, in the right-left center part of the cooling heat exchanger 10 where the parallel flow path unit 38 is provided, it becomes possible to sufficiently ensure an area of close contact between the cooling surface constituent member 12 and the flow path member 14, and also to provide large projected areas in the top-bottom direction for the flow path parts 40a to 40e.

The parallel flow path unit 38 is provided with a plurality of the projections 42. As depicted in FIGS. 2 and 3, the projection 42 juts out upward from a bottom surface of the recessed groove 32 at the flow path member 14 toward the cooling surface constituent member 12. The projection 42 is provided over an entire front-rear flow path width of the flow path part 40, and has ends in the front-rear direction connected to and continuous with the outer peripheral fixed part 20 or the inner peripheral fixed part 30 forming a side wall of the flow path part 40. In a plan view depicted in FIG. 4, the projection 42 has a V shape and is inclined rightward from a front-rear center toward the front-rear both ends.

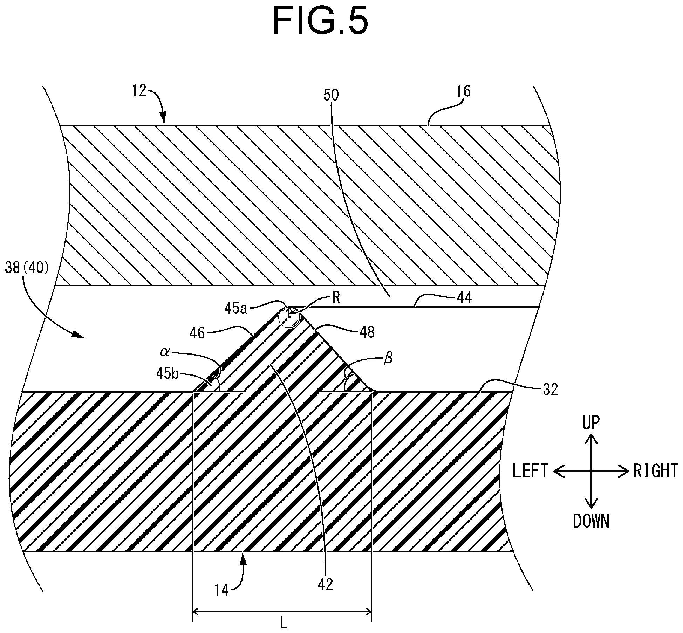

As depicted in an enlarged manner in FIG. 5, the projection 42 has a sectional shape tapered toward a jutting tip, and forms a ridge line 44 extending in a V shape in a part jutting out the highest position. The ridge line 44 extends in an inclined pattern from the flow path length direction of the flow path part 40. The ridge line 44 may be an angular edge shape, or may be configured as a plane or a curved surface and may have a width in the flow path length direction. The projection 42 of the present practical embodiment has a sectional shape where a projection apex 45a including the ridge line 44 is curved in an arc pattern. The top of the projection apex 45a forms the ridge line 44. With respect to a length dimension L of a projection base 45b (an end of the projection 42 connected to the bottom surface of the recessed groove 32) in the flow path length direction, the projection apex 45a has a radius of curvature R within a range from 0.05 to 1.5 times, more preferably, within a range from 0.25 to 0.9 times.

A side surface of the projection 42 on an upstream side of the flow path part 40 is a first inclined surface 46 that is an upstream inclined part inclined upward from an upstream side toward a downstream side to get closer the cooling surface constituent member 12. A side surface of the projection 42 on a downstream side of the flow path part 40 is a second inclined surface 48 that is a downstream inclined part inclined downward from an upstream side toward a downstream side to get farther from the cooling surface constituent member 12. The jutting height of the projection 42 from the bottom surface of the recessed groove 32 increases gradually from the upstream side toward the downstream side in a part upstream from the ridge line 44 (projection apex 45a) forming the first inclined surface 46, and decreases gradually from the upstream side toward the downstream side in a part downstream from the ridge line 44 (projection apex 45a) forming the second inclined surface 48. A magnitude relationship between inclination angle α of the first inclined surface 46 and an inclination angle β of the second inclined surface 48 may be any one of the followings: α < β, α = β, and α > β.

Specifically, in a section in the flow path length direction, the projection 42 has a substantially triangular sectional shape as a whole tapered toward the jutting tip. The projection 42 has an outer shape in section including the projection apex 45a curved in an arc pattern, the first inclined surface 46 extending upstream in an inclined pattern from an upstream end of the projection apex 45a toward the projection base 45b, and the second inclined surface 48 extending downstream in an inclined pattern from a downstream end of the projection apex 45a toward the projection base 45b that are provided continuously with each other. The ridge line 44 is defined by extending the upper end of the projection apex 45a continuously in the flow path width direction, and has a V shape in a top view composed of the two inclined linear parts.

While the first inclined surface 46 may have a curved shape, it has a planar shape in the present practical embodiment. An upper end of the first inclined surface 46 extends in a tangential direction from the upstream end of the projection apex 45a, and is continuous with the projection apex 45a smoothly without forming an edge. A lower end of the first inclined surface 46 may be curved in an arc pattern, and in this case, it is desirably continuous with the bottom surface of the flow path part 40 (recessed groove 32) smoothly without forming an edge.

The inclination angle α of the first inclined surface 46 with respect to the bottom surface of the recessed groove 32 forming the flow path part 40 is within a range from 20 to 70°, more preferably, within a range from 30 to 60°. If the first inclined surface 46 has a curved shape, the inclination angle α of the first inclined surface 46 with respect to the bottom surface of the recessed groove 32 can be grasped as an average of inclination angles of the first inclined surface 46 with respect to the bottom surface of the recessed groove 32, for example.

While the second inclined surface 48 may have a curved shape, it has a planar shape in the present practical embodiment. An upper end of the second inclined surface 48 extends in a tangential direction from the downstream end of the projection apex 45a, and is continuous with the projection apex 45a smoothly without forming an edge. A lower end of the second inclined surface 48 may be curved in an arc pattern, and in this case, it is desirably continuous with the bottom surface of the flow path part 40 (recessed groove 32) smoothly without forming an edge.

The inclination angle β of the second inclined surface 48 with respect to the bottom surface of the recessed groove 32 is within a range from 20 to 70°, more preferably, within a range from 30 to 60°. In the present practical embodiment, the inclination angle α of the first inclined surface 46 and the inclination angle β of the second inclined surface 48 are substantially equal to each other. However, these angles may become different from each other by making the inclination angle α of the first inclined surface 46 larger than the inclination angle β of the second inclined surface 48, for example. If the second inclined surface 48 has a curved shape, the inclination angle β of the second inclined surface 48 with respect to the bottom surface of the recessed groove 32 can be grasped as an average of inclination angles of the second inclined surface 48 with respect to the bottom surface of the recessed groove 32, for example.

The jutting height dimension of the projection 42 is desirably within a range from 0.1 to 1.3 times, more preferably, within a range from 0.25 to 0.9 times the width dimension of the projection 42 in the flow path width direction. By doing so, it becomes possible to effectively fulfill the action of stirring the heat medium using flow of the heat medium in climbing over the projection 42, and also possible to prevent the flow of the heat medium from being restricted excessively by the projection 42, thereby realizing smooth flow of the heat medium.

While the sectional shape of the projection 42 has been described by referring to FIG. 5 depicting the section thereof in the flow path length direction passing through the center of the flow path width direction, any section of the projection 42 orthogonal to the ridge line 44 has a similar sectional shape to that depicted in FIG, 5, and each of the numerical value ranges described above is preferably applied to any section orthogonal to the ridge line 44.

The projection 42 is provided in each of the flow path parts 40a, 40b, 40d, and 40e. In each of these flow path parts 40, the projections 42 are aligned in the flow path length direction corresponding to a flow direction of the heat medium.

By the provision of the projection 42 jutting out from the bottom surface of the recessed groove 32 in the flow path member 14 toward the cooling surface constituent member 12, a portion of the flow path part 40 with the projection 42 forms a narrow flow path portion 50 reduced in flow path sectional area. In the narrow flow path portion 50, the flow path sectional area on the first inclined surface 46 of the projection 42 becomes smaller gradually toward the downstream side, the flow path sectional area on the second inclined surface 48 of the projection 42 increases gradually toward the downstream side, and the flow path sectional area is minimum at the ridge line 44 of the projection 42.

Furthermore, in each of the flow path parts 40a, 40b, 40d, and 40e provided with a plurality of the projections 42, these projections 42 form a plurality of the narrow flow path portions 50. In each of the flow path parts 40a, 40b, 40d, and 40e, the projection 42 located on a more downstream side has a larger jutting height, and the narrow flow path portion 50 located on a more downstream side has a smaller minimum flow path sectional area. This allows the flow velocity of the heat medium passing through the narrow flow path portion 50 to be increased sufficiently on a downstream side.

Desirably, a jutting height dimension at the ridge line 44 corresponding to a maximum jutting height dimension of the projection 42 is equal to or greater than 30%, more preferably, equal to or greater than 50% of the top-bottom depth dimension of the flow path part 40. The length dimension of the projection 42 in the flow path length direction of the flow path part 40 is preferably equal to or less than the flow path width dimension of the flow path part 40, more preferably, equal to or less than 75% of the flow path width dimension of the flow path part 40. Desirably, the projection 42 is smaller in a length dimension (right-left dimension) than in a width dimension (front-rear dimension).

The heat medium in the parallel flow path unit 38 flows while climbing over the projection 42 to generate a turbulent flow such as a vertical vortex, thereby disturbing the flow to stir the heat medium. By doing so, in a flow path cross section of each flow path part 40 (a section orthogonal to the flow path length), a temperature boundary is eliminated to reduce non-uniformity in temperature of the heat medium, thereby encouraging temperature uniformity.

As depicted in FIGS. 1 and 4, the ridge line 44 of the projection 42 extends in an inclined pattern from the flow path length direction of the flow path part 40 (the flow direction of the heat medium) without extending in a direction parallel or orthogonal to the flow path length direction. Thus, in climbing over the projection 42 in a direction substantially orthogonal to the ridge line 44, the heat medium is subjected to change in a flow direction after climbing over the projection 42 to disturb the flow thereof more largely. As a result, temperature non-uniformity of the heat medium is reduced effectively by the stirring action. In particular, in the present practical embodiment, as the ridge line 44 extends in a V shape, flows of the heat medium having climbed over the corresponding linear parts of the ridge line 44 collide with each other to generate a turbulent flow. This further encourages expectation for the action of stirring the heat medium.

Here, as depicted in FIGS. 1 to 4, the projections 42 are provided partially in the parallel flow path unit 38 instead of being provided entirely and uniformly, and are arranged with particular imbalance. In this way, the parallel flow path unit 38 has a part with the projection 42 and a part without the projection 42. This generates a difference in intensity of the action of disturbing the flow of the heat medium resulting from climbing over the projection 42, thereby defining regions where the action of disturbing the flow of the heat medium using the projection 42 works differently.

Specifically, the projections 42 are provided in such a way that the number of the projections 42 increases from the center toward the both external sides in the front-rear direction. In the present practical embodiment, the flow path part 40c at the front-rear center is not provided with the projection 42. The flow path parts 40b and 40d external and next to the flow path part 40c in the front-rear direction are each provided with four projections 42, 42, 42, 42. The flow path parts 40a and 40e next to the flow path parts 40b and 40d and at the front and rear both ends respectively are each provided with seven projections 42, 42, ..., 42. Thus, the action of disturbing the flow of the heat medium is set at the lowest intensity in the flow path part 40c located at the center in the front-rear direction, and the action of disturbing the flow of the heat medium is set at the highest intensity in each of the flow path parts 40a and 40e at the both ends in the front-rear direction. In each of the flow path parts 40b and 40d, the action of disturbing the flow of the heat medium is set at a higher intensity than in the flow path part 40c and at a lower intensity than in each of the flow path parts 40a and 40e. In this way, in the cooling heat exchanger 10 of the present practical embodiment, the flow path parts 40a and 40e, the flow path parts 40b and 40d, and the flow path part 40c are defined as regions where the action of disturbing the flow of the heat medium using the projection 42 works differently. Each of a pair of the flow path parts 40a and 40b next to each other, a pair of the flow path parts 40b and 40c next to each other, a pair of the flow path parts 40c and 40d next to each other, and a pair of the flow path parts 40d and 40e next to each other has regions where the turbulent flow facilitating action works differently.

Each of the flow path parts 40a, 40b, 40d, and 40e is provided with the plurality of projections 42 arranged at positions separated from each other in the flow path length direction. Thus, in each of the flow path parts 40, a portion without the projection 42 and having a flat lower surface is defined between the projections 42, 42.

The projection 42 is provided on a downstream side of the parallel flow path unit 38, and is absent on an upstream side of the parallel flow path unit 38. More specifically, the projection 42 is provided on a right side, which is a downstream side with respect to the center of the parallel flow path unit 38 in the flow path length direction (right-left direction), and is absent on a left side corresponding to an upstream side. Thus, in the downstream-side region with the projection 42, the action of disturbing the flow of the heat medium is set at a higher intensity than in the upstream-side region without the projection 42. In other words, in the parallel flow path unit 38, regions where the action of disturbing the flow of the heat medium using the projection 42 works differently are defined in such a way as to be aligned on an upstream side (the region without the projection 42) and on a downstream side (the region with the projection 42) in the flow direction of the heat medium. The projection 42 is not provided at a downstream end of the parallel flow path unit 38, and is arranged on the left side of the right end of the inner peripheral fixed part 30.

Furthermore, in each of the flow path parts 40a, 40b, 40d, and 40e, the projections 42 are arranged in such a way as to be separated by a narrower gap in the right-left direction corresponding to the flow path length direction of each flow path part 40 toward the right side corresponding to the downstream side of the parallel flow path unit 38. Thus, in each of the flow path parts 40a, 40b, 40d, and 40e, the action of disturbing the flow of the heat medium using the projection 42 is set at a higher intensity toward the downstream side. In this way, in the present practical embodiment, in addition to defining the regions on the upstream side and the downstream side where the turbulent flow facilitating action works differently as a result of the presence or absence of the projection 42, this downstream-side region is composed of regions where the turbulent flow facilitating action works differently as a result of a difference in gap between the projections 42. These two, or three or more regions forming the downstream-side region in the presence of a difference in gap between the projections 42 are aligned in the flow direction of the heat medium. More specifically, the flow path part 40a can also be recognized as a configuration having regions where the turbulent flow facilitating action works differently including an upstream region from an upstream-side end to a first projection 42, a middle region from the first projection 42 to a fourth projection 42, and a downstream region from the fourth projection 42 to a seventh projection 42, for example. All gaps between the projections 42 are not required to be narrower toward the right side. As an example, there may be a part where the projections 42 are separated by the same gap or where a gap becomes wider toward the right side.

When the heat medium flows while climbing over the projection 42, the heat medium passes through the narrow flow path portion 50 having a small flow path sectional area, thereby increasing the flow velocity thereof. By doing so, the action of disturbing the flow works more effectively on the flowing heat medium while climbing over the projection 42. In particular, in the present practical embodiment, a flow path sectional area becomes smaller in the narrow flow path portion 50 on a more downstream side. Thus, during passage through the narrow flow path portion 50, the flow velocity of the heat medium is allowed to be increased sufficiently even on a downstream side, making it possible to disturb the flow of the heat medium effectively.

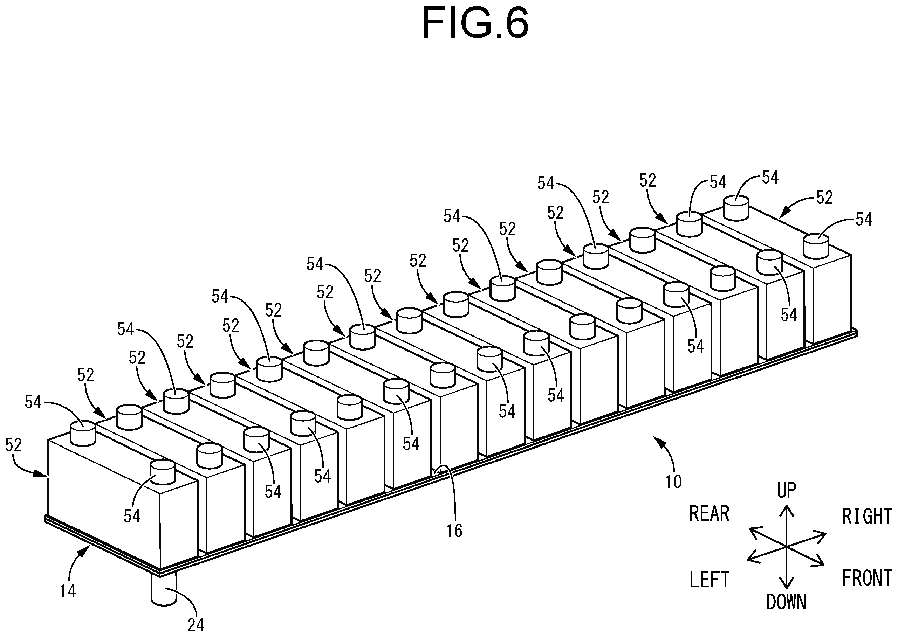

As depicted in FIG. 6, the cooling heat exchanger 10 having the above configuration is mounted with the battery packs 52 as cooling targets. The battery pack 52 is a battery to be used in a motorized vehicle such as an electric car or a hybrid car, for example. The battery pack 52 has a substantially rectangular solid outer shape as a whole, for example, and has a front-rear width dimension larger than a right-left length dimension. A terminal part 54 protruding upward is provided at each of front and rear both ends of the battery pack 52. The terminal part 54 is an output terminal for outputting a large current via a bus bar not depicted in the drawings. Thus, the battery pack 52 of the present practical embodiment in a used state is likely to be brought to higher temperature at each of the front and rear both ends with the terminal parts 54 than at a front-rear center.

As depicted in FIG. 6, with the plurality of battery packs 52 aligned in the right-left direction, respective lower surfaces of these battery packs 52 are superposed on the cooling surface 16 composed of the upper surface of the cooling surface constituent member 12. In the present practical embodiment, 15 battery packs 52 are mounted on one cooling surface 16.

In the cooling heat exchanger 10, the cooling surface 16 is brought to low temperature through heat exchange between the cooling heat medium flowing in the cooling flow path 36 and the cooling surface constituent member 12. The battery pack 52 to generate heat during operation is placed on the cooling surface 16, and the battery pack 52 is cooled through heat exchange between the cooling surface constituent member 12 including the cooling surface 16 and the battery pack 52. In other words, heat is exchanged via the cooling surface constituent member 12 between the battery pack 52 and the heat medium flowing in the cooling flow path 36, thereby cooling the battery pack 52.

The heat medium is increased in temperature by receiving heat from the battery pack 52. In particular, the heat medium flowing in an upper part in the cooling flow path 36 close to the battery pack 52 is increased in temperature. On the other hand, the heat medium flowing in a lower part in the cooling flow path 36 is far from the battery pack 52 and is increased in temperature less than in the upper part. For this reason, the heat medium in the cooling flow path 36 is likely to have a temperature distribution where a temperature becomes higher toward an upper side. As a result, a temperature difference between the battery pack 52 and the heat medium at high temperature flowing in the upper part is reduced, thereby reducing efficiency in heat exchange between the battery pack 52 and the heat medium.

In this regard, in the cooling heat exchanger 10, the projection 42 is provided in the parallel flow path unit 38 at the cooling flow path 36, and the heat medium is stirred in climbing over the projection 42, thereby reducing a temperature difference of the heat medium in the top-bottom direction. By doing so, the heat medium in the upper part flowing near the battery pack 52 is prevented from being brought to high temperature to ensure a large temperature difference between the battery pack 52 and the heat medium in the upper part, making it possible to improve efficiency in heat exchange between the battery pack 52 and the heat medium.

As the heat medium exchanges heat with the plurality of battery packs 52 while flowing from upstream toward downstream, the heat medium is brought to higher temperature on the downstream side, thereby reducing the efficiency in heat exchange with the battery pack 52 easily. In response to this, in the cooling heat exchanger 10, the projection 42 is provided only on the downstream side where the heat medium is subjected to temperature increase in its upper part to such a degree as to cause problematic reduction in heat exchange efficiency. Thus, the heat medium is stirred on the downstream side by the projection 42, thereby encouraging suppression of temperature increase in the upper part of the heat medium. By doing so, a temperature difference is ensured between the battery pack 52 and the heat medium flowing around the battery pack 52 not only on the upstream side corresponding to an entry side of the heat medium at low temperature but also on the downstream side corresponding to a discharge side of the heat medium at high temperature, making it possible to ensure cooling performance.

As depicted in FIG. 6, with the plurality of battery packs 52 aligned in the right-left direction corresponding to the flow path length direction of the parallel flow path unit 38, it is conventionally likely that cooling of the battery pack 52 on the downstream side will become insufficient, so that performance reduction will develop easily in the battery pack 52 on the downstream side due to deterioration. This causes a problem peculiar to battery cooling that, on the occurrence of performance reduction in some battery packs 52 on the downstream side, the performance of a battery cell as a whole composed of the plurality of battery packs 52 will be reduced due to influence from the deteriorated battery packs 52. In this regard, in the cooling heat exchanger 10 of the present practical embodiment, the battery pack 52 even on the downstream side is cooled effectively by the action of stirring the heat medium using the projection 42. This makes it possible to reduce a likelihood that only some of the plurality of battery packs 52 will be deteriorated, thereby preventing performance reduction of the battery cell as a whole.

As the projection 42 is absent on the upstream side of the parallel flow path unit 38, the heat medium flowing in the lower part far from the battery pack 52 is maintained at low temperature as it causes small temperature increase through heat exchange with the battery pack 52 during flow on the upstream side. For this reason, by stirring the heat medium having reached the downstream side using the projection 42, the temperature of the heat medium flowing in the upper part is reduced significantly, making it possible to achieve effective cooling performance even on the downstream side.

Furthermore, in the cooling heat exchanger 10 of the present practical embodiment, the projections 42 are arranged in such a way as to be separated by a narrower gap toward the downstream side. Thus, the intensity of the action of disturbing the flow of the heat medium is set higher on a more downstream side, thereby encouraging retention of cooling performance even on the downstream side where temperature increase of the heat medium is likely to cause the problem of efficiency reduction in heat exchange with the battery pack 52. Moreover, in the present practical embodiment, the jutting height dimension of the projection 42 is set larger toward the downstream side, thereby fulfilling the action of stirring the heat medium using the projection 42 more intensely on the downstream side.

As described above, in the cooling heat exchanger 10, formation of the projections 42 in terms of arrangement, the number thereof, etc. is set with consideration for the flow direction of the heat medium in the parallel flow path unit 38. This allows retention of cooling performance over a wide range in the flow direction of the heat medium.

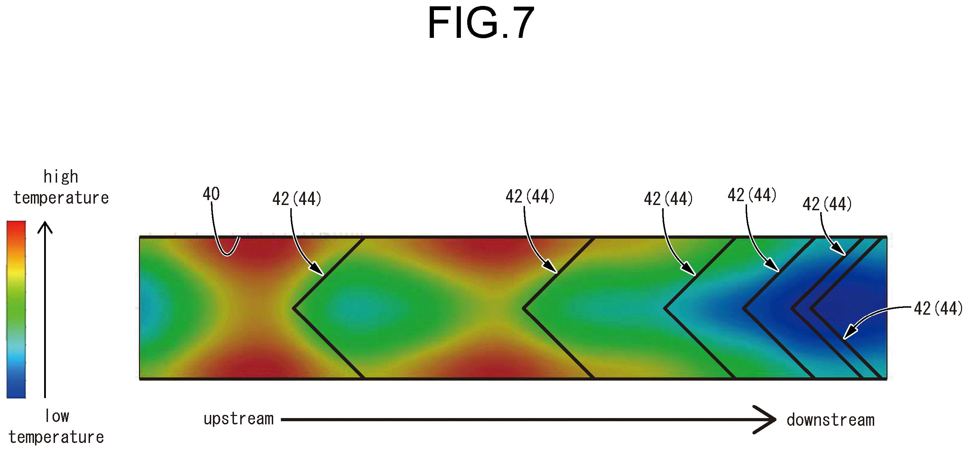

Reduction in the temperature of the heat medium resulting from climbing over the projection 42 is also shown in simulation result about a temperature distribution of the heat medium in the flow path part 40 depicted in FIG. 7. FIG. 7 depicts a temperature distribution of the heat medium flowing in an upper part of one flow path part 40 by way of a hue difference. As understood from FIG. 7, the temperature of the heat medium changes between an upstream side and a downstream side with respect to the projection 42. Specifically, by climbing of the heat medium over the ridge line 44 of the projection 42 from the upstream side toward the downstream side, the temperature of the heat medium becomes lower on the downstream side with respect to the ridge line 44 of the projection 42. The reason for this can be that, on the downstream side with respect to the ridge line 44 of the projection 42, a turbulent flow is generated in the heat medium to stir the heat medium, and the heat medium at low temperature flowing in a lower part of the flow path part 40 is mixed with the heat medium flowing in the upper part, thereby reducing the temperature of the heat medium in the upper part of the flow path part 40.

As understood from the temperature distribution in FIG. 7, as a gap between the projections 42 becomes narrower, the temperature of the heat medium flowing in the upper part of the flow path part 40 is reduced more largely. Thus, it is further confirmed by the simulation result in FIG. 7 that narrowing a gap between the projections 42 makes it possible to more effectively fulfill the action of disturbing the flow of the heat medium using the projection 42.

The battery pack 52 generates a large amount of heat at the front and rear both ends where the terminal parts 54 are provided, and is easily brought to higher temperature at the front and rear both ends than at the front-rear center. Thus, the heat medium flowing in the parallel flow path unit 38 is easily brought to higher temperature toward the front and rear both sides. In this regard, in the cooling heat exchanger 10, among the five flow path parts 40a to 40e forming the parallel flow path unit 38, the flow path part 40 located on a more external side in the front-rear direction is provided with a larger number of the projections 42. Specifically, the flow path parts 40a and 40e located directly below the front and rear both ends of the battery pack 52 are each provided with the largest number of seven projections 42 to fulfill the action of stirring the flow of the heat medium most intensely using these projections 42, thereby preventing reduction in heat exchange efficiency caused by temperature increase of the heat medium in the upper part. The flow path parts 40b and 40d near the front and rear both ends of the battery pack 52 are each provided with the four projections 42 of a number smaller than that in each of the flow path parts 40a and 40e and larger than that in the flow path part 40c, and these projections 42 are used to effectively prevent local temperature increase of the heat medium.

As described above, in the cooling heat exchanger 10, formation of the projections 42 in terms of arrangement, the number thereof, etc. is set with consideration for the temperature distribution (the way of heat generation) of the battery pack 52 as a cooling target. This allows the battery pack 52 to be cooled efficiently.

In the cooling heat exchanger 10, while the projection 42 to disturb the flow of the heat medium in the parallel flow path unit 38 is provided in a required place, it is not provided in an unrequired place. By doing so, it is possible to encourage improvement in cooling performance while allowing the heat medium to flow smoothly without disturbing the flow of the heat medium unnecessarily.

In the present practical embodiment, the downstream-side region as a particular region is defined in a different way from the upstream-side region as another region in terms of provision of the projection 42. In the downstream-side region as the particular region, the sectional shape of the flow path part 40 is changed by the projection 42, and regulation of cooling efficiency determined by the heat medium is encouraged on the basis of the turbulent flow facilitating action on the heat medium using the projection 42. Moreover, in the downstream-side region, a gap between the projections 42 becomes narrower non-uniformly toward the downstream side. Thus, the downstream-side region can also be considered as a plurality of regions, and in this case, these regions are regions defined differently in terms of a gap between the projections 42.

In the present practical embodiment, each of front and rear external regions as particular regions is defined in a different way from a front-rear inner region as another region in terms of a larger number of the formed projections 42. In each of the front and rear external regions as the particular regions, regulation of cooling efficiency determined by the heat medium is encouraged on the basis of the turbulent flow facilitating action on the heat medium using the projection 42. In the present practical embodiment, in terms of the presence or absence of the projection 42, for example, the flow path parts 40a, 40b, 40d, and 40e on the front and rear sides provided with the projections 42 can be considered as particular regions, and the flow path part 40c at the center without the projection 42 can be considered as another region. With focus on a difference in the number of the formed projections 42, for example, each of the flow path parts 40a to 40e can be considered as a particular region differing from the others.

According to a method of regulating the cooling action of the cooling heat exchanger 10 for regulating cooling efficiency determined by the heat medium in a particular region, by defining the particular region in a part of the battery pack 52 to generate a large amount of heat, for example, efficient cooling of the battery pack 52 is realized.

At the projection 42, with respect to the length dimension L of the projection base 45b (the end of the projection 42 connected to the bottom surface of the recessed groove 32) in the flow path length direction, the radius of curvature R of the projection apex 45a is within a range, preferably, from 0.05 to 1.5 times. By setting the radius of curvature R of the projection apex 45a equal to or greater than 0.05 times the length dimension L of the projection base 45b, the projection apex 45a is formed into a section having a smooth arc pattern without forming a substantial edge. Furthermore, by setting the radius of curvature R of the projection apex 45a equal to or less than 1.5 times the length dimension L of the projection base 45b, it becomes possible to prevent the length dimension of the projection 42 from increasing excessively in the flow path length direction and also possible to set the inclination angles α and β sufficiently large for the first inclined surface 46 and the second inclined surface 48 respectively smoothly continuous with the projection apex 45a. In the present practical embodiment, the radius of curvature R of the projection apex 45a is within a range from 0.05 to 0.5 times the length dimension L of the projection base 45b.

The inclination angle α of the first inclined surface 46 with respect to the bottom surface of the recessed groove 32 forming the flow path part 40 is within a range from 20 to 70°. By setting the inclination angle α of the first inclined surface 46 equal to or greater than 20°, a flow of the heat medium from the upstream side toward the projection 42 is disturbed effectively by the first inclined surface 46 forming a sufficiently large angle with respect to the flow direction of the heat medium, thereby encouraging improvement in cooling performance by the stirring action. Furthermore, by setting the inclination angle α of the first inclined surface 46 equal to or less than 70°, it becomes possible to prevent the flow of the heat medium from being restricted excessively by the projection 42.

The inclination angle β of the second inclined surface 48 with respect to the bottom surface of the recessed groove 32 is within a range from 20 to 70°. By setting the inclination angle β of the second inclined surface 48 equal to or greater than 20°, the flow of the heat medium in climbing over the projection 42 becomes separated easily from the second inclined surface 48. This encourages expectation for the effect of generating a disturbed flow such as a vortex flow easily on the downstream side with respect to the projection 42. Furthermore, by setting the inclination angle β of the second inclined surface 48 equal to or less than 70°, a flow of the heat medium is also ensured along the second inclined surface 48, encouraging expectation for efficient stirring of the heat medium resulting from joining with the flow thereof having been separated from the second inclined surface 48.

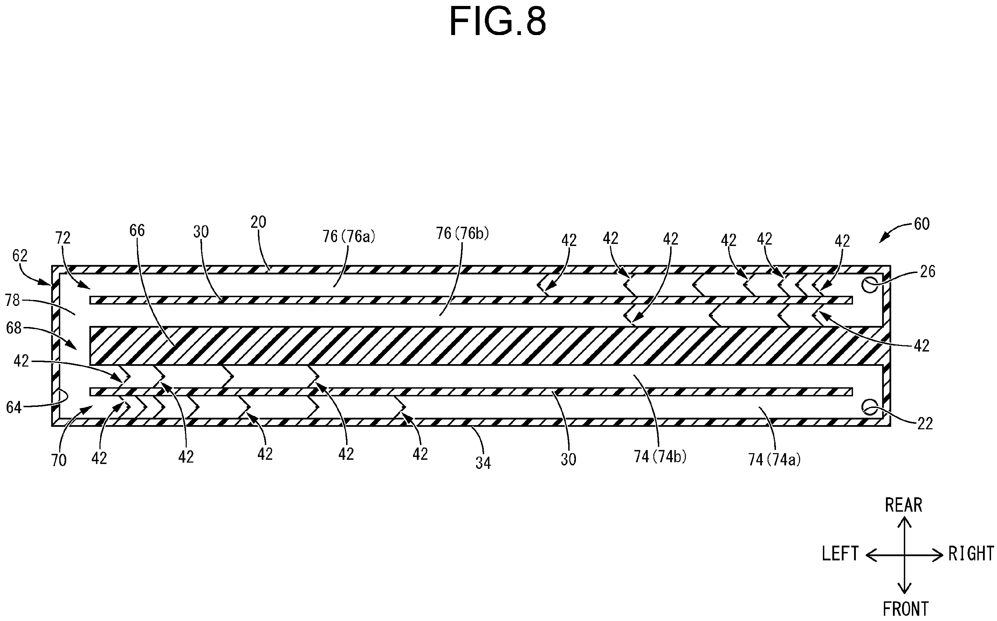

FIG. 8 depicts a cooling heat exchanger 60 according to a second practical embodiment of the present invention. In the following, descriptions of members and parts substantially the same as those of the first practical embodiment will be omitted by indicating such members and parts using the same signs in the drawing.

The cooling heat exchanger 60 includes a flow path member 62. The flow path member 62 has a rectangular plate shape as a whole, and includes a recessed part 64 opened upward. In a plan view depicted in FIG. 8, the recessed part 64 has a U shape turned sideways, and is provided with a center fixed part 66 extending leftward from a right-side portion of the outer peripheral fixed part 20. The center fixed part 66 is provided integrally and continuously with the outer peripheral fixed part 20, and has an upper surface located on the substantially same plane as the outer peripheral fixed part 20. The center fixed part 66 has a left end not reaching a left side portion of the outer peripheral fixed part 20 but separated rightward from the left side portion of the outer peripheral fixed part 20.

A cooling flow path 68 is formed by covering an upper opening of the recessed part 64 with a cooling surface constituent member (not depicted in the drawings). In the present invention, the cooling flow path 68 has a flow path shape that is a U shape turned sideways along which the cooling flow path 68 extends linearly and leftward from a right end, is bent rearward and extends, and at the end of the extension, extends linearly and rightward. In the present practical embodiment, the supply hole 22 is formed at a front right corner of the recessed part 64, and the discharge hole 26 is formed at a rear right corner of the recessed part 64.

The cooling flow path 68 includes parallel flow path units 70 and 72 extending in the right-left direction and defined at both ends. The upstream-side parallel flow path unit 70 is composed of two flow path parts 74a and 74b each extending linearly in the right-left direction, and is configured to cause the heat medium to flow in the two flow path parts 74a and 74b in the same direction from right to left. The inner peripheral fixed part 30 extending linearly in the right-left direction is provided between the two flow path parts 74a and 74b. The downstream-side parallel flow path unit 72 is composed of two flow path parts 76a and 76b each extending linearly in the right-left direction, and is configured to cause the heat medium to flow in the two flow path parts 76a and 76b in the same direction from left to right. The inner peripheral fixed part 30 extending linearly in the right-left direction is provided between the two flow path parts 76a and 76b.

A middle joining unit 78 connecting the upstream-side parallel flow path unit 70 and the downstream-side parallel flow path unit 72 of the cooling flow path 68 in series is provided between the parallel flow path units 70 and 72. The middle joining unit 78 forms a left end of the recessed part 64, and extends in the front-rear direction on the left side of the center fixed part 66. The heat medium flows in a branching manner in the flow path parts 74a and 74b of the upstream-side parallel flow path unit 70, and at the end of the flow, the branches join each other in the middle joining unit 78. Then, the heat medium flows in a branching manner in the flow path parts 76a and 76b of the downstream-side parallel flow path unit 72.

The upstream-side parallel flow path unit 70 is provided with a plurality of the projections 42. The projection 42 is formed in each of the flow path parts 74a and 74b. The projection 42 is provided not on an upstream side but on a downstream side of each of the flow path parts 74a and 74b. In each flow path part 74, the projections 42 are arranged in such a way as to be separated by a narrower gap in the flow path length direction (right-left direction) toward the downstream side. The flow path part 74a located on a front-rear external side (front side) is provided with the projections 42 of a larger number than those formed in the flow path part 74b located on a front-rear internal side. The projection 42 located on a downstream end of the flow path part 74a and the projection 42 located on a downstream end of the flow path part 74b exist at substantially the same positions in the respective flow path length directions of the flow path parts 74a and 74b. In the flow path part 74a, provision of the projection 42 starts from a more upstream side than in the flow path part 74b.

The downstream-side parallel flow path unit 72 is also provided with a plurality of the projections 42. The projection 42 is formed in each of the flow path parts 76a and 76b. The projection 42 is provided not on an upstream side but on a downstream side of each of the flow path parts 76a and 76b. In each flow path part 76, the projections 42 are arranged in such a way as to be separated by a narrower gap in the flow path length direction (right-left direction) toward the downstream side. The flow path part 76a located on a front-rear external side (rear side) is provided with the projections 42 of a larger number than those formed in the flow path part 76b located on a front-rear internal side. The projection 42 located on a downstream end of the flow path part 76a and the projection 42 located on a downstream end of the flow path part 76b exist at substantially the same positions in the respective flow path length directions of the flow path parts 76a and 76b. In the flow path part 76a, provision of the projection 42 starts from a more upstream side than in the flow path part 76b.

According to the cooling heat exchanger 60 having the above configuration, like in the cooling heat exchanger 10 of the first practical embodiment, it is possible to retain effective cooling performance over a wide region of the cooling flow path 68 and also possible to set cooling performance responsive to a temperature distribution, etc. of a battery pack (not depicted in the drawings) as a cooling target.

The middle joining unit 78 is provided that connects the upstream-side parallel flow path unit 70 and the downstream-side parallel flow path unit 72 in series, and flows of the heat medium having flowed in the flow path parts 74a and 74b forming the upstream-side parallel flow path unit 70 are joined each other in the middle joining unit 78 to be mixed. This reduces non-uniformity in temperature of the heat medium further in the middle joining unit 78 to bring the heat medium entirely to comparatively low temperature, thereby encouraging improvement in cooling performance in the downstream-side parallel flow path unit 72.

The middle joining unit 78 is not essential. As an example, the flow path parts 74a and 76a, and the flow path parts 74b and 76b may be provided independently of each other without joining each other.

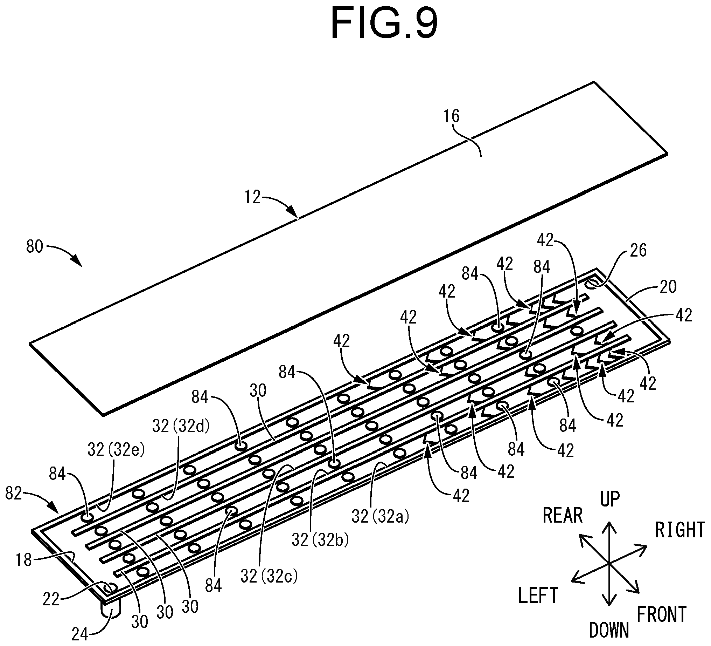

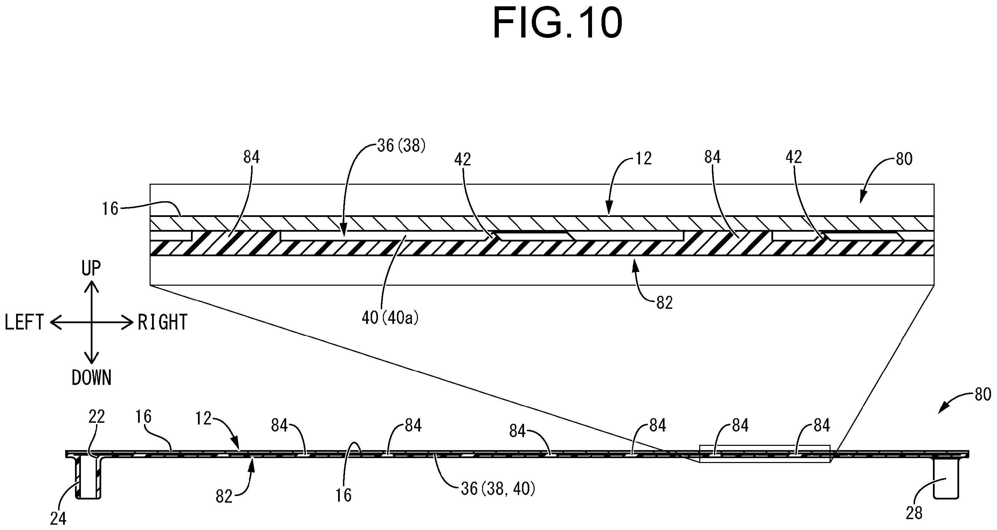

FIGS. 9 and 10 depict a cooling heat exchanger 80 according to a third practical embodiment of the present invention. The cooling heat exchanger 80 has a stacked structure where the cooling surface constituent member 12 and a flow path member 82 are superposed on each other.

The flow path member 82 includes a plurality of columnar fixed parts 84 protruding upward from the bottom surfaces of the five recessed grooves 32a to 32e. The columnar fixed part 84 has a substantially circular columnar shape, and has an upper surface located on the same plane as respective upper surfaces of the outer peripheral fixed part 20 and the inner peripheral fixed part 30. The columnar fixed part 84 is provided at a position separated from the projection 42 in the flow path length direction, and is provided independently of the projection 42. The five recessed grooves 32a to 32e are provided with the same number of the columnar fixed parts 84, and these columnar fixed parts 84 are arranged at substantially the same positions in the respective flow path length directions.

When the cooling surface constituent member 12 is superposed on and fixed to the flow path member 82, a lower surface of the cooling surface constituent member 12 is superposed in abutting contact with an upper surface of each columnar fixed part 84 in addition to an upper surface of each of the outer peripheral fixed part 20 and the inner peripheral fixed part 30 (see FIG. 10). Like the outer peripheral fixed part 20 and the inner peripheral fixed part 30, the columnar fixed part 84 is fixed to the cooling surface constituent member 12 by means such as adhesion.

According to the cooling heat exchanger 80 having the above configuration, as the cooling surface constituent member 12 and the flow path member 82 are fixed to each other further at the columnar fixed part 84, it is possible to join the cooling surface constituent member 12 and the flow path member 82 more firmly. This makes it possible to prevent the trouble of separation between the cooling surface constituent member 12 and the flow path member 82 resulting from the action of a liquid pressure of the heat medium flowing in the cooling flow path 36, the action of bending force on the cooling heat exchanger 80, and others, for example.

The shape of the columnar fixed part is not always limited to a circular columnar shape but it may be an elliptical columnar shape, a polygonal columnar shape, or a deformed columnar shape, for example.

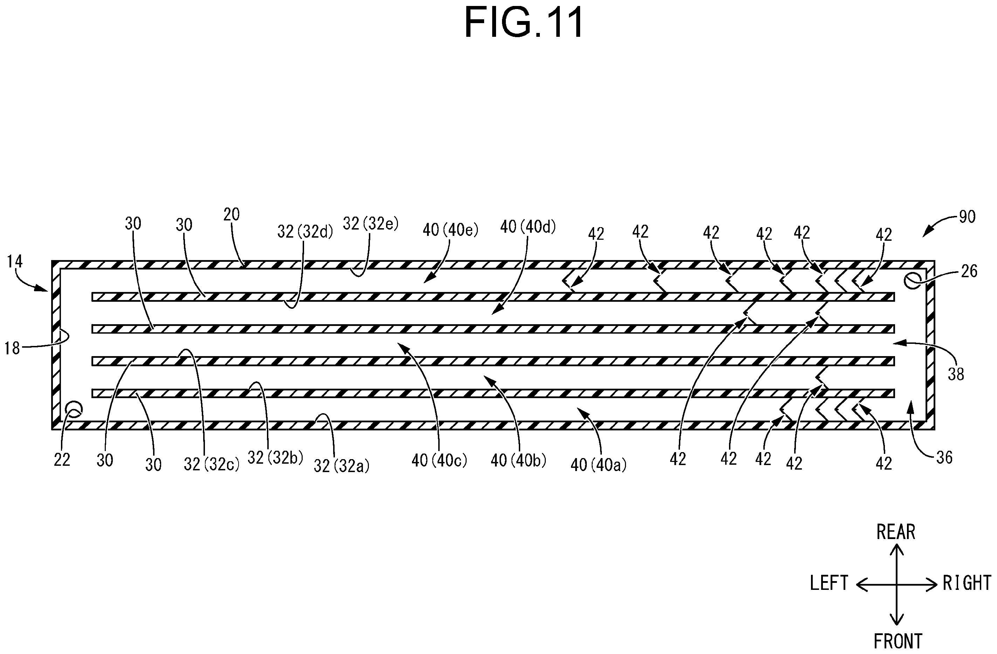

FIG. 11 depicts a cooling heat exchanger 90 according to a fourth practical embodiment of the present invention. Like in the cooling heat exchanger 10 of the first practical embodiment, in the cooling heat exchanger 90, the projection 42 is formed in each of the flow path parts 40a, 40b, 40d, and 40e.

In the cooling heat exchanger 10 of the first practical embodiment, the flow path part 40a and the flow path part 40e are provided with the same number of the projections 42 arranged with the gap and in the same arrangement, thereby providing the flow path parts 40a and 40e with substantially the same actions of disturbing the flow of the heat medium (turbulent flow facilitating actions). Furthermore, the flow path part 40b and the flow path part 40d are provided with the same number of the projections 42 arranged with the gap and in the same arrangement, thereby providing the flow path parts 40b and 40d with substantially the same turbulent flow facilitating actions. By contrast, in the cooling heat exchanger 90 of the present practical embodiment, the number of the formed projections 42 differs between all the five flow path parts 40a to 40e to make the turbulent flow facilitating action work differently between all the flow path parts 40a to 40e.

More specifically, the number of the formed projections 42 differs between the flow path part 40a and the flow path part 40e located on the front and rear both ends to make the turbulent flow facilitating action using the projection 42 work differently between the flow path part 40a and the flow path part 40e, for example. The number of the formed projections 42 further differs between the flow path part 40b and the flow path part 40d to make the turbulent flow facilitating action using the projection 42 work differently between the flow path part 40b and the flow path part 40d. The flow path parts 40a to 40e of the present practical embodiment are named in order of decreasing number of the formed projections 42: the flow path part 40e, the flow path part 40a, the flow path part 40d, the flow path part 40b, and the flow path part 40c.

By generating the differences in the number of the formed projections 42 between the flow path parts 40a to 40e, regions where the turbulent flow facilitating action works differently are defined between corresponding flow path parts among the flow path parts 40a to 40e. In the cooling heat exchanger 90, cooling efficiency determined by the heat medium in each flow path part 40 becomes higher in the flow path part 40 with a larger number of the formed projections 42. Thus, high cooling performance is fulfilled at each of the front and rear both ends of the cooling heat exchanger 90, in particular, higher cooling performance is fulfilled at the rear end.

According to the above cooling heat exchanger 90 of the present practical embodiment, if a battery pack 52 generates heat of an amount differing between front and rear terminal parts 54, 54, for example, it is possible to provide cooling performance responsive to the amount of heat generated at each terminal part 54. In the present practical embodiment, if the amount of heat generated at the rear-side terminal part54 is larger than the amount of heat generated at the front-side terminal part 54, cooling is performed in response to the amounts of generated heat, making it possible to reduce a temperature difference over the entire battery pack 52.

In the example shown in the present practical embodiment, regions where the turbulent flow facilitating action works differently between the flow path parts 40 are defined on the basis of a difference in the number of the formed projections 42 between the flow path parts 40. Such a difference in turbulent flow facilitating action can also be defined on the basis of a difference between the flow path parts 40 in terms of the height or shape of the projection 42, a gap between the projections 42, or arrangement of the projections 42, for example. It is further possible to define a difference in turbulent flow facilitating action between regions by combining differences in terms of the number of the formed projections 42, the height or shape of the projection 42, a gap between the projections 42, arrangement of the projections 42, etc. as described above, as appropriate. In this connection, like in the above practical embodiments, all the flow path parts of the above practical embodiment depicted in FIG. 11 can be recognized as regions where the turbulent flow facilitating action works differently such as regions where the presence or absence of the projection 42 differs from each other or regions where a gap between the projections 42 differs from each other, for example. Also in the following practical embodiments, statement relating to regions where the turbulent flow facilitating action works differently should be interpreted in a limited sense.

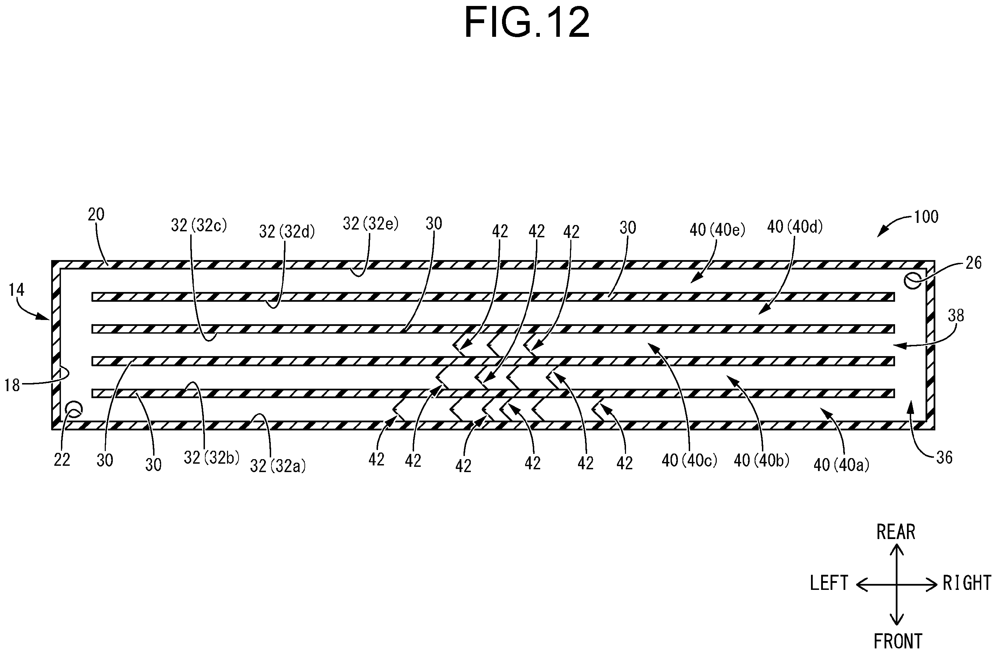

FIG. 12 depicts a cooling heat exchanger 100 according to a fifth practical embodiment of the present invention. In the cooling heat exchanger 100, the projection 42 is formed in each of the flow path parts 40a to 40c and the projection 42 is not formed in the flow path parts 40d and 40e, so that the projections 42 are arranged in a concentrated manner in a front area of the parallel flow path unit 38.

Each of the flow path parts 40a to 40c is provided with a plurality of the projections 42. In each of the flow path parts 40a to 40c, the projections 42 are all located in the middle in the flow path length direction (right-left direction), and a region without the projection 42 is defined in each of an upstream-side end and a downstream-side end. Thus, in the present practical embodiment, the parallel flow path unit 38 includes the plurality of projections 42 provided partially in such a way as to be concentrated in the front end and in the center part in the right-left direction. In each of the flow path parts 40a to 40c, the number of the formed projections 42 becomes larger toward the front.

The six projections 42 provided in the flow path part 40a are separated by gaps that become wider toward both external sides (upstream side and downstream side) in the flow path length direction of the flow path part 40a. Likewise, the four projections 42 provided in the flow path part 40b are separated by gaps that become wider toward both external sides (upstream side and downstream side) in the flow path length direction of the flow path part 40b. Meanwhile, the three projections 42 provided in the flow path part 40c are separated by gaps that are substantially constant in the flow path length direction of the flow path part 40c.

A minimum gap between the projections 42 in the flow path part 40a is set smaller than a minimum gap between the projections 42 in the flow path part 40b. The projection 42 at an external end in the flow path length direction of the flow path part 40a is located on a more external position in the flow path length direction than the projection 42 at an external end in the flow path length direction of the flow path part 40b. Furthermore, the projection 42 at the external end in the flow path length direction of the flow path part 40b is located on a more external position in the flow path length direction than the projection 42 at an external end in the flow path length direction of the flow path part 40c.

According to the above cooling heat exchanger 100 of the present practical embodiment, it is possible to fulfill more excellent cooling performance in the right-left center part of the front end where the projections 42 are provided in a concentrated manner. Thus, if a cooling target is to generate a large amount of heat in the right-left center part of the front end, it is possible to efficiently cool the part of a large amount of generated heat.

In the configuration shown as an example in present practical embodiment, the projections 42 are provided in a concentrated manner in the right-left center part of the front end to provide spot improvement in cooling performance. Meanwhile, a position where spot improvement in cooling performance is achieved using the projection 42 is not limited to the right-left center part of the front end but may be set appropriately with consideration for a distribution of the amount of heat generated by a cooling target, for example. While a part where cooling performance is to be improved using the projection 42 is set in one location in the present practical embodiment, it may be set in two or more locations.

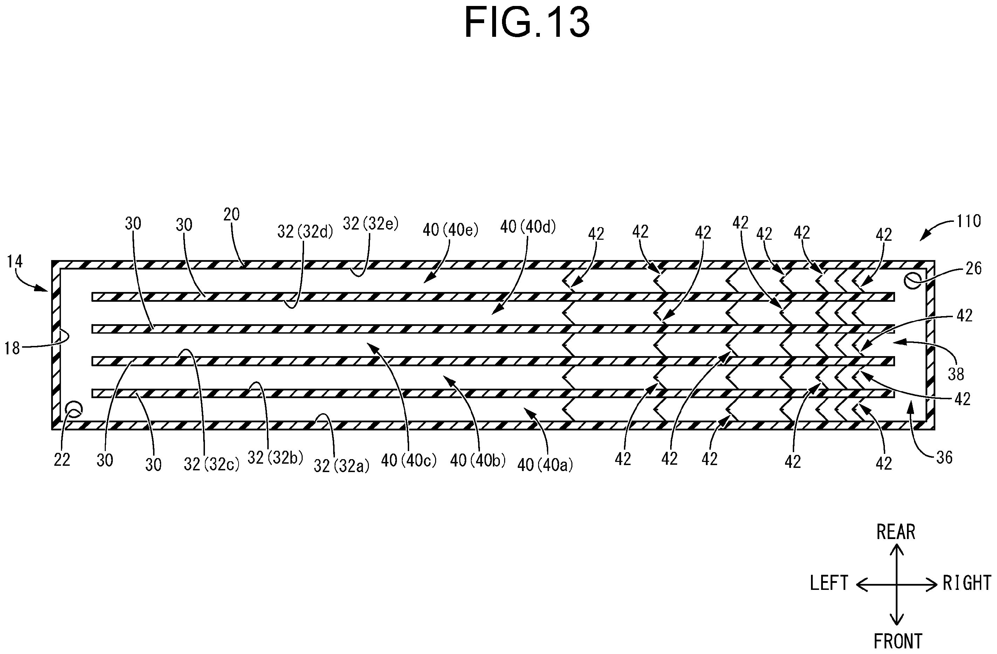

FIG. 13 depicts a cooling heat exchanger 110 according to a sixth practical embodiment of the present invention. In the cooling heat exchanger 110, formation of the projections 42 in terms of a shape, a size including a height, arrangement, a gap, etc. is substantially the same between the five flow path parts 40a to 40e. By doing so, in the present practical embodiment, the action of disturbing the flow of the heat medium works in substantially the same ways between the flow path parts 40a to 40e. Each flow path part 40 includes a plurality of the projections 42 provided in substantially the same arrangement with substantially the same gaps as those in each of the flow path parts 40a and 40e of the first practical embodiment. Thus, in each flow path part 40, regions where the action of disturbing the flow of the heat medium using the projection 42 works differently are provided in the flow path length direction of the flow path part 40.

As shown in the present practical embodiment, the action of disturbing the flow of the heat medium is not always required to differ between a plurality of the flow path parts 40 forming the parallel flow path unit 38 but may differ only in the flow path length direction (the flow direction of the heat medium) of the parallel flow path unit 38. According to the cooling heat exchanger 110 of the present practical embodiment, if a battery pack 52 is to generate heat over its entire area from right to left, for example, it is possible to cool the battery pack 52 over the entire area from right to left. Furthermore, even on the downstream side where the temperature of the heat medium is increased easily through heat exchange with the battery pack 52, it is still possible to achieve effective cooling performance by the turbulent flow facilitating action using the projection 42.

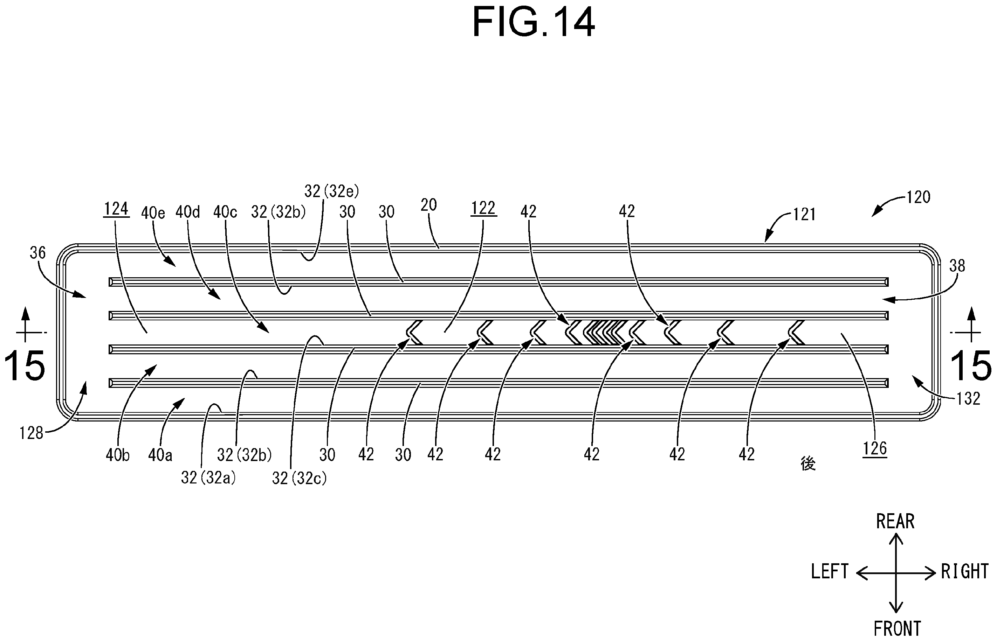

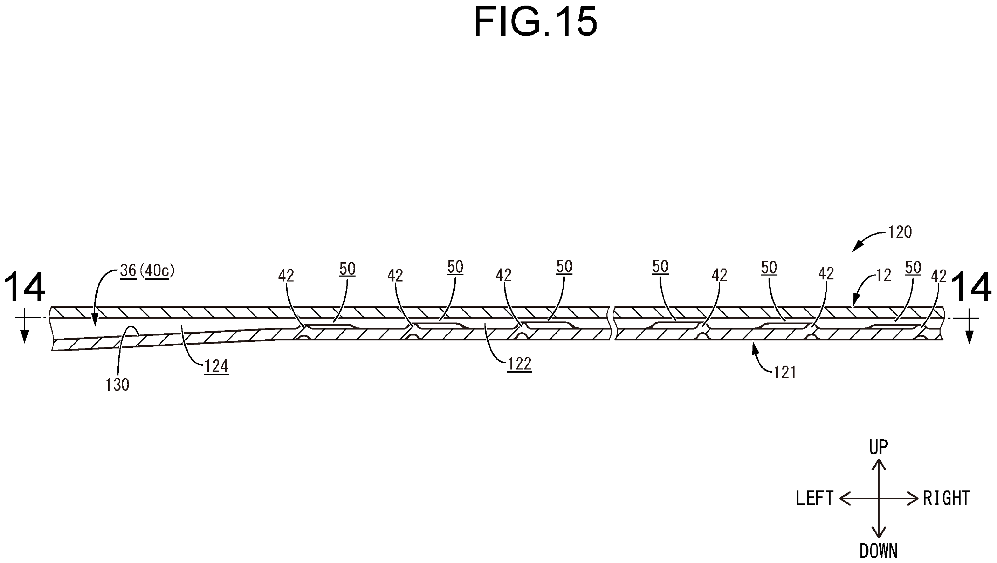

FIG. 14 depicts a cooling heat exchanger 120 according to a seventh practical embodiment of the present invention. As depicted in FIG. 15, the cooling heat exchanger 120 of the present practical embodiment has a configuration where the cooling surface constituent member 12 and a flow path member 121 are superposed on and fixed to each other, and the cooling flow path 36 is formed between respective superposed surfaces of the cooling surface constituent member 12 and the flow path member 121. The flow path member 121 of the present practical embodiment is composed of a pressed fitting, and includes the outer peripheral fixed part 20, the supply port 24, the discharge port 28, the inner peripheral fixed part 30, and others provided integrally by pressworking.

As depicted in FIG. 14, in the cooling heat exchanger 120, the projection 42 is formed only in the flow path part 40c forming a center part in the flow path width direction of the parallel flow path unit 38, and the projection 42 is absent in the other flow path parts 40a, 40b, 40d, and 40e. The projection 42 is formed only in a center part in the flow path length direction of the flow path part 40c, and the projection 42 is absent in an upstream part and a downstream part of the flow path part 40c. In the flow path part 40c, the center part in the flow path length direction is a turbulent flow part 122 with the projection 42, an upstream side with respect to the turbulent flow part 122 is a first laminar flow part 124 as a laminar flow part without the projection 42, and a downstream side with respect to the turbulent flow part 122 is a second laminar flow part 126 without the projection 42. A surface of the projection 42 exposed at the flow path part 40c has a sectional shape the same as that in the first practical embodiment.

The turbulent flow part 122 is provided with a plurality of the projections 42 aligned in the flow path length direction. As depicted in FIG. 15, these projections 42 provided in the turbulent flow part 122 have jutting height dimensions that become larger toward the center in the flow path length direction. Thus, the jutting height dimensions of the projections 42 aligned in the length direction become larger gradually toward the center, and then become smaller gradually from the center toward the downstream side. In a section taken in the flow path length direction depicted in FIG. 15, the projections 42 have figures similar to each other in the present practical embodiment. Meanwhile, these projections 42 may have shapes differing from each other with the respective length dimensions constant at the bases (projection bases 45b), for example.

As depicted in FIGS. 14 and 15, regarding the plurality of projections provided in the turbulent flow part 122, a gap (pitch) between the projections 42, 42 next to each other in the flow path length direction becomes narrower toward the center in the flow path length direction, and a gap between the projections 42, 42 in the center part is narrower than a gap between the projections 42, 42 at each of both ends in the flow path length direction. Thus, a gap between the projections 42, 42 next to each other in the length direction becomes narrower gradually toward the center, and then becomes wider gradually from the center toward the downstream side. The flow path part 40c of the present practical embodiment is provided with the projections 42 of a number equal between the upstream side and the downstream side with respect to the center in the flow path length direction.

The first laminar flow part 124 without the projection 42 is connected on an upstream side to an inlet-side flow path part 128 including the supply port 24, and is connected on a downstream side to the turbulent flow part 122. The first laminar flow part 124 has a flow path length dimension shorter than that of the turbulent flow part 122. As depicted in FIG. 15, a bottom surface of the first laminar flow part 124 is an inclined bottom surface 130 inclined upward toward the downstream side, and gets closer to the lower surface of the cooling surface constituent member 12 toward the downstream side. This makes the flow path sectional area of the first laminar flow part 124 smaller toward the downstream side. The inclined bottom surface 130 may be changed in inclination angle in the flow path length direction or the flow path width direction (between the plurality of flow path parts 40). However, in the present invention, the inclined bottom surface 130 has a constant inclination angle and is composed of a plane tilted from the lower surface of the cooling surface constituent member 12. The lower surface of the cooling surface constituent member 12 is a plane substantially parallel to the cooling surface 16 as an upper surface, so that the inclined bottom surface 130 is also inclined from the cooling surface 16.

The second laminar flow part 126 without the projection 42 is connected on an upstream side to the turbulent flow part 122, and is connected on a downstream side to an outlet-side flow path part 132 including the discharge port 28. The second laminar flow part 126 has a flow path length dimension shorter than that of the turbulent flow part 122. The second laminar flow part 126 extends in the flow path length direction with a substantially constant section. In the turbulent flow part 122, a constant section substantially the same as that in the second laminar flow part 126 is defined in a part between the projections 42, 42 next to each other, which is a part except the projection 42. Thus, the respective lower surfaces of the second laminar flow part 126 and the turbulent flow part 122 are both configured as planes extending substantially parallel to the lower surface of the cooling surface constituent member 12.

The inlet-side flow path part 128 is provided on the upstream side of the parallel flow path unit 38, and causes the plurality of flow path parts 40 to branch and extend downstream from the inlet-side flow path part 128. The outlet-side flow path part 132 is provided on the downstream side of the parallel flow path unit 38, and causes the plurality of flow path parts 40 to join each other.

The inlet-side flow path part 128 and the outlet-side flow path part 132 of the present practical embodiment have capacities differing from each other. Specifically, the inlet-side flow path part 128 has a larger capacity than the outlet-side flow path part 132. In the present practical embodiment, the inlet-side flow path part 128 has a larger flow path depth dimension than the outlet-side flow path part 132. While a flow path length dimension and a flow path width dimension may differ between the inlet-side flow path part 128 and the outlet-side flow path part 132, these dimensions are substantially equal in the present practical embodiment.

According to the cooling heat exchanger 120 of the present practical embodiment described above, the projection 42 is provided only in the center part in each of the width direction and the length direction of the parallel flow path unit 38. Thus, if a cooling target such as a battery pack superposed on the cooling surface 16 is to generate heat at a location corresponding to the center part in each of the width direction and the length direction of the cooling surface 16, it is possible to cool the cooling target efficiently. Furthermore, by improving cooling performance using the projection 42 only in the part corresponding to the location of heat generation by the cooling target, cooling performance is prevented from being reduced locally by the heat generation by the cooling target, making it possible to more uniformly cool the cooling target. By doing so, it becomes possible to prevent deterioration of the cooling target due to local temperature increase thereof.

In the present practical embodiment, regarding the plurality of projections 42 aligned in the flow path length direction of the flow path part 40c, these projections 42 are formed in such a way that a jutting height dimension becomes larger toward the center in the flow path length direction. The action of stirring the heat medium using the projection 42 works more intensely as the jutting height of the projection 42 becomes larger. Thus, in the present practical embodiment, it is possible to achieve the effect of improving cooling performance by stirring of the heat medium more intensely toward the center in the flow path length direction of the flow path part 40c.

In the present practical embodiment, regarding the plurality of projections 42 aligned in the flow path length direction of the flow path part 40c, these projections 42 are arranged in such a way that a gap between the projections 42, 42 next to each other becomes narrower toward the center in the flow path length direction. As the gap between the projections 42, 42 becomes narrower, the action of stirring the heat medium using the projection 42 works more intensely. Thus, in the present practical embodiment, it is possible to achieve the effect of improving cooling performance by stirring of the heat medium more intensely toward the center in the flow path length direction of the flow path part 40c.

In the present practical embodiment, in the flow path part 40c, the turbulent flow part 122 with the projection 42 is defined only in the center part in the flow path length direction, the first laminar flow part 124 without the projection 42 is provided on the upstream side with respect to the turbulent flow part 122, and the second laminar flow part 126 without the projection 42 is provided on the downstream side with respect to the turbulent flow part 122. By doing so, in the upstream part and the downstream part except the center part where improvement in cooling performance is to be encouraged, the heat medium is caused to flow smoothly without being hindered by the projection 42.

The bottom surface of the first laminar flow part 124 on the upstream side with respect to the turbulent flow part 122 is configured as the inclined bottom surface 130 having a flow path sectional area that becomes smaller toward the downstream side. This causes the heat medium in the first laminar flow part 124 to flow at an increased flow velocity toward the downstream side. The heat medium increased in velocity flows into the turbulent flow part 122, thereby more easily generating a turbulence in the flow resulting from climbing over the projection 42. Thus, the effect of improving cooling performance by the action of stirring the heat medium is fulfilled more advantageously.

In the turbulent flow part 122, a flow path section is substantially constant in a part except the projection 42. Thus, in the part without the projection 42, change in the flow velocity, etc. of the heat medium resulting from change in a flow path section is unlikely to occur, so that change in the flow of the heat medium by the provision of the projection 42 is controlled more easily.

In the cooling heat exchanger 120 of the present practical embodiment, the inlet-side flow path part 128 has a larger capacity than the outlet-side flow path part 132. Thus, by forming the flow path parts 74 and 76 constituting the parallel flow path units 70 and 72 connecting the inlet-side flow path part 128 and the outlet-side flow path part 132 to each other into flow path sectional areas that become smaller toward the downstream side, for example, it further becomes possible to suppress reduction in the flow velocity of the heat medium on the downstream side of each of the flow path parts 74 and 76.

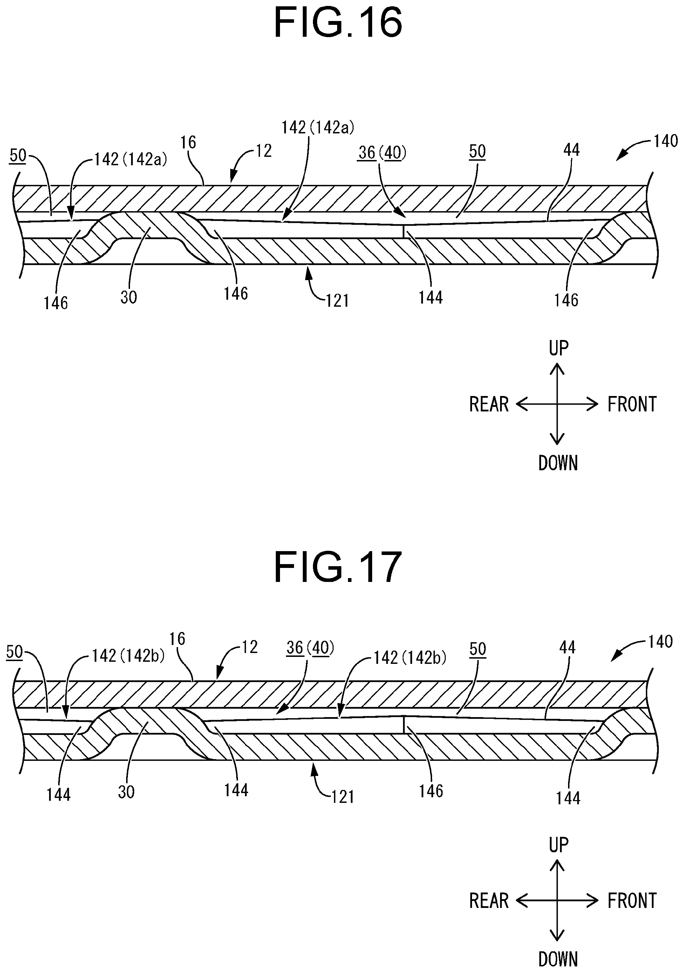

FIGS. 16 and 17 depict a cooling heat exchanger 140 according to an eighth practical embodiment of the present invention. The cooling heat exchanger 140 includes a plurality of projections 142 provided in the flow path part 40 and composed of a first projection 142a and a second projection 142b having respective different shapes viewed in a flow path length direction. Like the projection 42 in the seventh practical embodiment, the projection 142 has a substantially V shape viewed in the top-bottom direction.

As depicted in FIG. 16, the first projection 142a has a minimum jutting height dimension in a center part in a flow path width direction of the flow path part 40, and the jutting height dimension increases gradually toward both sides in the flow path width direction. Specifically, the first projection 142a includes a low jutting portion 144 having a small jutting height dimension and formed in the center part in the flow path width direction, and high jutting portions 146, 146 having a large jutting height dimension and formed in both ends in the flow path width direction. A change rate of the jutting height dimension of the first projection 142a may vary in the flow path width direction. However, in the present practical embodiment, this jutting height dimension becomes larger at a constant change rate toward the both sides of the flow path width direction, so that the ridge line 44 is formed into a linear shape. In the present practical embodiment, the both ends of the first projection 142a at the greatest height are continuous integrally with the side wall of the flow path part 40 (the outer peripheral fixed part 20 or the inner peripheral fixed part 30), and the first projection 142a is provided continuously over the entire flow path width direction of the flow path part 40.

As depicted in FIG. 17, the second projection 142b has a maximum jutting height dimension in the center part in the flow path width direction of the flow path part 40, and the jutting height dimension decreases gradually toward the both sides in the flow path width direction. Specifically, the second projection 142b includes the high jutting portion 146 having a large jutting height dimension and formed in the center part in the flow path width direction, and the low jutting portions 144, 144 having a small jutting height dimension and formed in both ends in the flow path width direction. A change rate of the jutting height dimension of the second projection 142b may vary in the flow path width direction. However, in the present practical embodiment, this jutting height dimension becomes smaller at a constant change rate toward the both sides of the flow path width direction, so that the ridge line 44 is formed into a linear shape. In the present practical embodiment, the both ends of the second projection 142b at the lowest height are continuous integrally with the side wall of the flow path part 40, and the second projection 142b is provided continuously over the entire flow path width direction of the flow path part 40.

A plurality of the first projections 142a and a plurality of the second projections 142b are each aligned in the length direction of the flow path part 40, and are arranged at different positions in the flow path length direction of the flow path part 40. In the present practical embodiment, the first projection 142a and the second projection 142b are provided alternately and next to each other in the flow path length direction. Thus, in the center part in the flow path width direction of the flow path part 40, the low jutting portion 144 of the first projection 142a and the high jutting portion 146 of the second projection 142b are arranged alternately in the flow path length direction. At the both ends in the flow path width direction of the flow path part 40, the high jutting portions 146, 146 of the first projection 142a and the low jutting portions 144, 144 of the second projection 142b are arranged alternately in the flow path length direction.

The heat medium flowing in the flow path length direction of the flow path part 40 climbs over the first projection 142a and the second projection 142b, thereby disturbing the flow to stir the heat medium. In particular, climbing over the high jutting portions 146, 146 of the first projection 142a and climbing over the high jutting portion 146 of the second projection 142b disturbs the flow of the heat medium more intensely, thereby achieving the effect of improving cooling performance by stirring of the heat medium.

The heat medium tries to flow preferentially through the low jutting portion 144 of the first projection 142a and the low jutting portions 144, 144 of the second projection 142b where a flow resistance is low while avoiding the high jutting portions 146, 146 of the first projection 142a and the high jutting portion 146 of the second projection 142b where a flow resistance is high. In this regard, in the present practical embodiment, the high jutting portions 146, 146 of the first projection 142a and the low jutting portions 144, 144 of the second projection 142b are arranged alternately in the flow path length direction, and the low jutting portion 144 of the first projection 142a and the high jutting portion 146 of the second projection 142b are arranged alternately in the flow path length direction. By doing so, after the heat medium passes through the low jutting portion 144 of the first projection 142a, the heat medium flows toward the high jutting portion 146 of the second projection 142b on the downstream side. This fulfills the action of stirring the heat medium using the high jutting portion 146 of the second projection 142b more intensely. Moreover, after the heat medium passes through the low jutting portions 144, 144 of the second projection 142b, the heat medium flows toward the high jutting portions 146, 146 of the first projection 142a on the downstream side. This fulfills the action of stirring the heat medium using the high jutting portions 146, 146 of the first projection 142a more intensely. By arranging the first projection 142a and the second projection 142b alternately in the flow path length direction of the flow path part 40 in this way, it becomes possible to more advantageously achieve the effect of improving cooling performance based on the action of stirring the heat medium, etc.

While the first projection 142a and the second projection 142b are desirably arranged alternately in the flow path length direction, they may also be arranged in such a way as to bring a plurality of the first projections 142a next to each other or bring a plurality of the second projections 142b next to each other in the flow path length direction, for example. The number of the formed first projections 142a and that of the formed second projections 142b may differ from each other. The low jutting portion 144 of the first projection 142a and the low jutting portions 144, 144 of the second projection 142b may differ from each other in height. The high jutting portions 146, 146 of the first projection 142a and the high jutting portion 146 of the second projection 142b may differ from each other in height.

While the practical embodiments of the present invention have been described above in detail, the present invention is not limited by the specific statements of the practical embodiments. For example, the number of the flow path parts 40 forming the parallel flow path unit 38 is not particularly limited but is simply required to be a plural number of two or more. As long the flow path parts 40 forming the parallel flow path unit 38 are arranged in parallel with each other, they are not required to extend as parallel paths in a strict sense but may be wave-like paths extending in meandering patterns or may be inclined from each other. As is also understood from this, the flow directions of the heat medium that are the same between the plurality of flow path parts 40 forming the parallel flow path unit 38 include not only a case where the flow directions are exactly the same but also a case where the flow directions as a whole cause the heat medium to flow in the same direction. More specifically, even if the flow path parts 40, 40 forming the parallel flow path unit 38 and next to each other cause the heat medium to flow in directions inclined relative to each other within a range of equal to or less than 15 degrees, for example, these directions can still be considered to be the same.

The specific shape of the projection is not particularly limited but may be a spot-like hemispherical shape, conical shape, truncated conical shape, or columnar shape, for example. The projection is not always required to be provided over the entire flow path width of the flow path part 40. While the projection desirably has a V shape in a plan view like in the above practical embodiments, it may extend orthogonal to the flow path length direction of the flow path part 40 or may be inclined to one direction to extend in a pattern leaning to one side, for example. Furthermore, if the projection having a V shape in a plan view is employed, the V shape is inclined downstream from the center toward the both ends in the front-rear direction in the above practical embodiments. Meanwhile, a V shape (inverted V shape) inclined upstream from the center toward the both ends in the front-rear direction is also applicable. The side surfaces on the both sides of the projection in the flow path length direction are not always required to be composed of inclined surfaces but may be composed of planes orthogonal to the flow path length direction or stepped surfaces like stairs, for example.

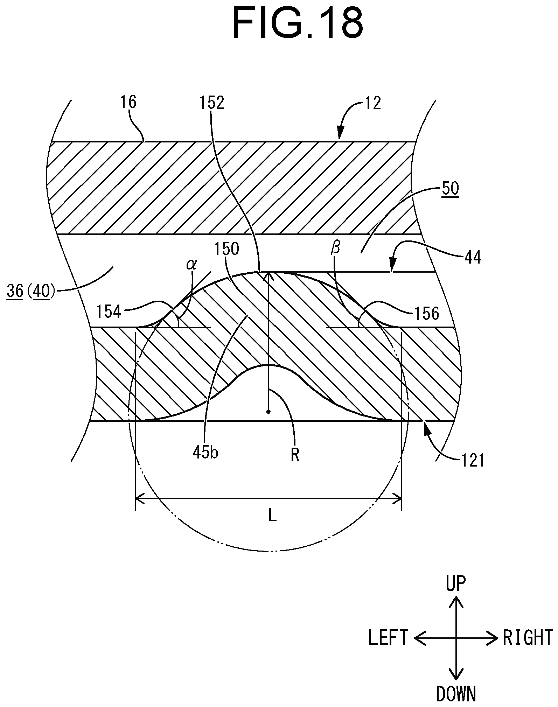

A projection 150 such as that depicted in FIG. 18 is also applicable, for example. Specifically, the projection 150 has a large radius of curvature at a projection apex 152, has a first inclined surface 154 as an upstream inclined part corresponding to an upstream-side side surface and a second inclined surface 156 as a downstream inclined part corresponding to a downstream-side side surface that are both composed of curved surfaces, and the first inclined surface 154 and the second inclined surface 156 are provided in such a way as to connect the projection apex 152 and the bottom surface of the flow path part 40 to each other smoothly and continuously without forming an edge. Thus, the projection 150 has an outer shape in section in the flow path length direction that is entirely formed as a continuous curved shape. In the projection 150 in FIG. 18, the radius of curvature at the projection apex 152 having an arc pattern in a section in the flow path length direction is set at a dimension that is preferably equal to or greater than 0.7 times, more preferably, at an equal dimension to or greater than the length dimension L of the projection base 45b. The inclination angle α of the first inclined surface 154 of the present practical embodiment with respect to the bottom surface of the flow path part 40 is equal to or less than 25°. The inclination angle β of the second inclined surface 156 of the present practical embodiment with respect to the bottom surface of the flow path part 40 is equal to or less than 25°. Specifically, compared to the projection 42 (see FIG. 5) described in the first practical embodiment, in a section viewed in the flow path length direction, the projection 150 of the present practical embodiment has a flat shape where the ratio of a jutting height dimension to the length dimension L of the projection base 45b is small and the projection 150 results in a small change rate of a flow path sectional area. This projection 150 reduces pressure loss occurring when the heat medium climbs over the projection 150, making it possible to circulate the heat medium using an inexpensive pump having comparatively low performance.

The projection is not always required to be provided continuously over the entire flow path width direction of the flow path part. However, the width dimension of the projection in the flow path width direction is desirably equal to or greater than 50%, more preferably, equal to or greater than 70% of the flow path width dimension of the flow path part. By doing so, a flow bypassing the projection is restricted to easily generate a flow of climbing over the projection, so that the action of disturbing the flow of the heat medium using the projection works efficiently.

The plurality of projections may be composed of several types of projections differing from each other in shape, size, etc. As a result of such a difference between the projections in shape, size, etc., it is possible to define regions where the action of disturbing the flow of the heat medium using the projection works differently.

As a more specific example, in the cooling heat exchanger 10 of the first practical embodiment described above, the jutting height dimension of the projection 42 provided in the flow path part 40a may be set larger than the jutting height dimension of the projection 42 provided in the flow path part 40e. By doing so, a difference is generated between the action of disturbing the flow of the heat medium in the flow path part 40a provided with the projection 42 having the larger jutting height dimension and the action of disturbing the flow of the heat medium in the flow path part 40e provided with the projection 42 having the smaller jutting height dimension. This also makes it possible to define regions in the flow path parts 40a and 40e where the action of disturbing the flow of the heat medium works differently. In the presence of the plurality of projections 42 in one flow path part 40, by making respective jutting height dimensions of these projections 42 differ from each other, it also becomes possible to define a plurality of regions in the flow path length direction where the action of disturbing the flow of the heat medium works differently in one flow path part 40. Specifically, by increasing the jutting height dimension of the projection 42 gradually toward the downstream side, it further becomes possible to fulfill the action of disturbing the flow of the heat medium more intensely on the downstream side than on the upstream side.

By employing a wide projection provided over the entire flow path width of the flow path part and a narrow projection provided only in a part of the flow path width of the flow path part in combination, for example, it becomes possible to achieve the action of disturbing the flow of the heat medium more intensely in the region where the wide projection is formed than in the region where the narrow projection is formed.

"The regions where the action of disturbing the flow of the heat medium works differently" or "the particular region where the flow of the heat medium is disturbed by changing the sectional shape of the flow path part" is desirably grasped as a length region including a plurality of projections formed with predetermined regularity or having a sectional shape of the flow path part changed repeatedly with predetermined regularity, for example. As an example, the predetermined regularity mentioned herein is not limited to "a configuration where the same projections are formed at a constant gap" or "a configuration where changed parts having the same flow path sectional shape are provided at a constant gap" but it also includes "a gap or a cycle of projections or flow path sectional shapes to change with regularity" in a case where a gap between projections or a change cycle of flow path sectional shapes becomes smaller gradually in the flow path direction, and/or "the shape or size of a projection or a flow path section to change with regularity" in a case where such a gap or a change cycle becomes larger gradually in the flow path direction. "The length region including a plurality of projections formed with predetermined regularity or having a sectional shape of the flow path part changed repeatedly with predetermined regularity" described above preferably makes a return to a constant basic sectional shape (including a size) defined in the flow path part in a part between a changed part and a changed part subjected to change in sectional shape such as a part between a projection and a projection. A sectional shape of the flow path part may be changed not only by providing the projection but also by providing a recessed part or by narrowing an entire periphery of the flow path part, for example.

"The regions where the action of disturbing the flow of the heat medium using the projection works differently" are simply required to be at least two regions, and one of these regions may be a region without the projection. Regarding a plurality of regions to be compared as "the regions where the action of disturbing the flow of the heat medium using the projection works differently," these regions are desirably composed of regions having the same flow path length. Meanwhile, with respect to a region having the shortest flow path length among the plurality of regions to be compared, for example, flow path lengths may be set uniformly in the regions to be compared. Likewise, "the particular region where the flow of the heat medium is disturbed by changing the sectional shape of the flow path part" may also be a region such that, by defining at least one particular region, it becomes possible to recognize the presence of the particular region regulated in cooling efficiency compared to other regions. No limitation is imposed on the location of the particular region, the number of the particular regions, the length of the particular region, etc.

The position of the projection 42, the number of the projections 42 (arrangement density), the shape or size of the projection 42, and others are merely shown as examples in each of the above practical embodiments, and are set appropriately with consideration for a temperature distribution of the battery pack 52, the amount of heat generation by the battery pack 52, the flow direction of the heat medium, etc. More specifically, if a battery pack to be cooled includes the terminal part 54 provided in a center part in the front-rear direction, for example, the projections 42 are arranged in such a way that the number of the projections 42 becomes largest in the flow path part 40c located at the center in the front-rear direction and becomes smallest in the flow path parts 40a and 40e at the front and rear both ends. By doing so, it becomes possible to efficiently cool the front-rear center of the battery pack to generate a large amount of heat.

In the configuration shown as an example in the above practical embodiments, a small number of the projections 42 are provided sparsely in the parallel flow path unit 38. Meanwhile, the projections 42 may be arranged substantially uniformly in a substantially entire area of the parallel flow path unit 38, and a part without the projection 42 may be provided locally in the parallel flow path unit 38. As another example, it is further possible to provide several types of projections in the parallel flow path unit 38 entirely that differ from each other in a shape or size so fulfill the action of disturbing the flow of the heat medium differently from each other.

In the configuration shown as an example in the above practical embodiments, the projection 42 is separated downward from the cooling surface constituent member 12 and the narrow flow path portion 50 is formed between the projection 42 and the cooling surface constituent member 12. Meanwhile, the projection 42 may partially be in abutting contact with the cooling surface constituent member 12.

As shown as an example in the above practical embodiments, the flow path sectional area of the narrow flow path portion 50 desirably becomes smaller in the flow direction of the heat medium toward the downstream side. Meanwhile, the flow path sectional area of the narrow flow path portion on the downstream side may be larger than the flow path sectional area of the narrow flow path portion on the upstream side at least in a partial area. In one case, the flow path sectional areas of all the narrow flow path portions can be substantially constant. Moreover, the flow path sectional areas of a plurality of the narrow flow path portions provided in parallel and at the same position in the flow direction of the heat medium may differ from each other.

In the example shown in the above practical embodiments, a difference in flow path sectional area between the narrow flow path portions 50 is generated by a difference in height between the projections 42. Meanwhile, the cooling surface constituent member 12 may be provided with a jutting portion formed at a position corresponding to the projection 42 and jutting from the lower surface thereof, and the flow path sectional area of the narrow flow path portion formed between the projection 42 and the jutting portion inserted in the recessed groove 32 may be adjusted. In this case, by generating a difference in jutting height between a plurality of the jutting portions at the cooling surface constituent member 12, it becomes possible to generate a difference in flow path sectional area between the narrow flow path portions while the jutting heights of the projections 42 are kept constant. Furthermore, it is possible to change a separation distance between the projection 42 and the cooling surface constituent member 12, for example, by changing the height position of the jutting tip of the projection 42 in a direction in which the ridge line 44 extends. By doing so, instead of changing a maximum jutting height of the projection 42, it becomes possible to adjust the flow path sectional area of the narrow flow path portion using the height or width of the projection 42 in a part different from a maximum jutting portion.

The flow path lengths of the narrow flow path portions provided on the plurality of projections 42 are not required to be constant but are controllable individually, as appropriate. By generating a difference in flow path length between the narrow flow path portions, for example, it becomes possible to regulate flow resistances of the heat medium therein relative to each other.

As an example, the cooling surface constituent member 12 may be made of synthetic resin, or the flow path member 14 may be made of metal. In order to ensure high heat conductivity, the cooling surface constituent member 12 made of synthetic resin is preferably formed using heat-conductive synthetic resin prepared by mixing a heat-conductive filler such as aluminum oxide (alumina), silica, or silicon carbide with a synthetic resin material such as polyphenylene sulfide (PPS), polyamide, polypropylene, or polybutylene terephthalate (PBT), for example.

The cooling target is not always limited to a battery for a motorized vehicle but may be a stationary-type battery for industrial purposes, for example. In the example shown in the above-described first preferred embodiment, the cooling surface 16 of one cooling heat exchanger 10 is mounted with a plurality of the battery packs 52. Meanwhile, the cooling surface 16 of one cooling heat exchanger 10 may be mounted with one battery pack 52, for example. As another example, one battery pack 52 may be arranged over a plurality of the cooling heat exchangers 10.

The following examples listed below are directed to advantageous embodiments which may represent separate and independent inventions:

### EMBODIMENTS

A. A cooling heat exchanger comprising:
   a cooling surface configured to be superposed on a cooling target for cooling the cooling target; and
   a cooling flow path for causing a cooling heat medium to flow therein,
   wherein the cooling flow path includes a parallel flow path unit composed of a plurality of flow path parts extending in parallel and next to each other and causing the heat medium to flow in the same direction between the plurality of flow path parts,
   the parallel flow path unit is provided with a plurality of projections for disturbing a flow of the heat medium, and
   regions where action of disturbing the flow of the heat medium using the projection works differently are defined in the parallel flow path unit.
B. The cooling heat exchanger according to embodiment A, wherein the regions where the action of disturbing the flow of the heat medium works differently are defined at different positions in a flow direction of the heat medium in at least one of the flow path parts forming the parallel flow path unit.
C. The cooling heat exchanger according to embodiment B, wherein regarding the regions defined at the different positions in the flow direction of the heat medium in the parallel flow path unit, where the action of disturbing the flow of the heat medium works differently, the action of disturbing the flow of the heat medium using the projection is set to work more intensely in a region located on a more downstream side.
D. The cooling heat exchanger according to any one of embodiments a 1-C, wherein the projection is provided over an entire flow path width of the flow path part forming the parallel flow path unit, and a narrow flow path portion for causing the heat medium to flow therein is provided on a jutting tip side of the projection.
E. The cooling heat exchanger according to embodiment D, wherein a plurality of the narrow flow path portions is formed by the plurality of projections, and at least one of the plurality of narrow flow path portions differs in a flow path sectional area than the other narrow flow path portion.
F. The cooling heat exchanger according to embodiment E, wherein flow path sectional areas of the plurality of narrow flow path portions provided in one of the flow path parts become smaller from an upstream side toward a downstream side.
G. The cooling heat exchanger according to any one of embodiments 1A-F, wherein the projection is provided partially in the parallel flow path unit, and a region with the projection and a region without the projection constitute the regions where the action of disturbing the flow of the heat medium works differently.
H. The cooling heat exchanger according to any one of embodiments A-G, further comprises a stacked structure where a cooling surface constituent member forming the cooling surface is superposed on a flow path member provided with a recessed groove, wherein the recessed groove at the flow path member is covered by the cooling surface constituent member to form the cooling surface flow path, and
   the plurality of projections juts out from the flow path member toward the cooling surface constituent member.
I. The cooling heat exchanger according to any one of c embodiments A-H, wherein the regions where the action of disturbing the flow of the heat medium works differently are defined in at least one pair of the flow path parts next to each other in the parallel flow path unit.
J. The cooling heat exchanger according to any one of embodiments A-I, wherein the cooling target is a battery.
K. The cooling heat exchanger according to any one of embodiments A-J, wherein the regions where the action of disturbing the flow of the heat medium works differently are defined by a difference in a gap between the plurality of projections in the flow direction of the heat medium.
L. The cooling heat exchanger according to embodiment K, wherein the gap between the plurality of projections aligned in a flow path length direction in the flow path part becomes narrower toward a downstream side, and the regions where the action of disturbing the flow of the heat medium works differently are defined in the flow path length direction of the flow path part.
M. The cooling heat exchanger according to any one of embodiments A-L, wherein the regions where the action of disturbing the flow of the heat medium works differently are defined by a difference in height between the plurality of projections.
N. The cooling heat exchanger according to embodiment M, wherein the heights of the plurality of projections aligned in a flow path length direction in the flow path part become larger toward a downstream side, and the regions where the action of disturbing the flow of the heat medium works differently are defined in the flow path length direction of the flow path part.
O. The cooling heat exchanger according to any one of embodiments A-N, wherein the projection has a ridge line extending in an inclined pattern from a flow path length direction of the flow path part.
P. The cooling heat exchanger according to embodiment O, wherein the projection extends in a V shape inclined in the flow path length direction toward both sides in a flow path width direction of the flow path part.
Q. The cooling heat exchanger according to embodiment P, wherein the projection has a V shape extending toward the both sides in the flow path width direction of the flow path part and inclined toward a downstream side of the cooling flow path.
R. The cooling heat exchanger according to any one of embodiments A-Q, wherein the projection is provided only in a center part in a flow path length direction of the flow path part.
S. The cooling heat exchanger according to any one of embodiments A-R, wherein the projection is provided only in the flow path part forming a center part in a flow path width direction of the parallel flow path unit.
T. The cooling heat exchanger according to any one of embodiments A-S, wherein the flow path part is provided with the plurality of projections aligned in a flow path length direction of the flow path part, and a gap between the projections located in a center part in the flow path length direction of the flow path part is narrower than a gap between the projections located on each of both sides in the flow path length direction of the flow path part.
U. The cooling heat exchanger according to any one of embodiments A-T, wherein the projection has a width dimension in a flow path width direction of the flow path part that is equal to or greater than 50% of the flow path width dimension of the flow path part.
V. The cooling heat exchanger according to any one of embodiments A-U, wherein the flow path width dimension of the flow path part is within a range from 0.3 to 30 times a width dimension of a partition wall making separation between the flow path parts next to each other.
W. The cooling heat exchanger according to any one of embodiments A-V, wherein a jutting height dimension of the projection is within a range from 0.1 to 1.3 times a width dimension of the projection.
X. The cooling heat exchanger according to any one of embodiments A-W, wherein the flow path part is provided with a laminar flow part without the projection, and a flow path sectional area of the flow path part in the laminar flow part becomes smaller toward a downstream side.
Y. The cooling heat exchanger according to embodiment X, wherein a flow path length of the laminar flow part is shorter than a flow path length of a turbulent flow part with the projection defined in a part different from the laminar flow part.
Z. The cooling heat exchanger according to embodiment Y, wherein in the turbulent flow part with the projection defined in the part of the flow path part different from the laminar flow part, a part except the projection has a constant section.
AA. The cooling heat exchanger according to any one of embodiments A-Z, wherein an inlet-side flow path part is provided on an upstream side of the parallel flow path unit and causes the plurality of flow path parts to branch and extend downstream from the inlet-side flow path part,
   an outlet-side flow path part is provided on a downstream side of the parallel flow path unit and causes the plurality of flow path parts to join each other, and
   the inlet-side flow path part has a larger capacity than the outlet-side flow path part.
AB. The cooling heat exchanger according to any one of embodiments A-AA, wherein a jutting height of the projection changes in a flow path width direction of the flow path part, one of a low jutting portion having a small jutting height and a high jutting portion having a large jutting height is located in a center part in the flow path width direction of the projection, and the other of the low jutting portion having a small jutting height and the high jutting portion having a large jutting height is located on each of both ends in the flow path width direction of the projection.
AC. The cooling heat exchanger according to embodiment AB, wherein the flow path part is provided with the plurality of projections aligned in a flow path length direction of the flow path part,
   the plurality of projections includes a first projection and a second projection arranged alternately in the flow path length direction of the flow path part, the first projection including the low jutting portion defined in the center part and the high jutting portion defined in each of the both ends in the flow path width direction of the flow path part, the second projection including the high jutting portion defined in the center part and the low jutting portion defined in each of the both ends in the flow path width direction of the flow path part.
AD. The cooling heat exchanger according to any one of embodiments A-AC, wherein the projection has a sectional shape tapered toward a jutting tip in a section in a flow path length direction of the flow path part, and the projection includes an arc-like projection apex, an upstream inclined part, and a downstream inclined part provided smoothly and continuously with each other without forming an edge, the upstream inclined part extending from the projection apex toward a projection base on the side of a bottom surface of the flow path part in an inclined pattern toward an upstream side of the flow path part, the downstream inclined part extending from the projection apex toward the projection base in an inclined pattern toward a downstream side.
AE. The cooling heat exchanger according to embodiment AD, wherein in the section in the flow path length direction of the flow path part, the projection apex has a radius of curvature within a range from 0.05 to 1.5 times a length dimension of the projection base, and
   in the section in the flow path length direction of the flow path part, an inclination angle of the upstream inclined part with respect to the bottom surface of the flow path part is within a range from 20 to 70°.
AF. The cooling heat exchanger according to embodiment AD, wherein in the section in the flow path length direction of the flow path part, an inclination angle of the upstream inclined part with respect to the bottom surface of the flow path part is equal to or less than 25°.
AG. The cooling heat exchanger according to any one of embodiments A-AF, wherein the projection extends over an entire flow path width of the flow path part and is continuous with a side wall of the flow path part at each of both ends of the projection.
AH. A method of regulating cooling action in a cooling heat exchanger, the cooling heat exchanger including: a cooling surface configured to be superposed on a cooling target; and a cooling flow path for causing a cooling heat medium to flow therein, the cooling flow path including a parallel flow path unit composed of a plurality of flow path parts extending in parallel and next to each other and causing the heat medium to flow in the same direction between the plurality of flow path parts,
   the method comprising:
   regulating efficiency in cooling using the heat medium in a particular region where the flow of the heat medium is disturbed by changing a sectional shape of the flow path part in the parallel flow path unit, by defining the particular region in a different way from another region.

### KEYS TO SYMBOLS

10 cooling heat exchanger (first practical embodiment)
12 cooling surface constituent member
14 flow path member
16 cooling surface
18 recessed part
20 outer peripheral fixed part
22 supply hole
24 supply port
26 discharge hole
28 discharge port
30 inner peripheral fixed part (partition wall)
32(32a-32e) recessed groove
36 cooling flow path
38 parallel flow path unit
40(40a-40e) flow path part
42 projection
44 ridge line
45a projection apex
45b projection base
46 first inclined surface (upstream inclined part)
48 second inclined surface (downstream inclined part)
50 narrow flow path portion
52 battery pack (cooling target)
54 terminal part
60 cooling heat exchanger (second practical embodiment)
62 flow path member
64 recessed part
66 center fixed part
68 cooling flow path
70 parallel flow path unit
72 parallel flow path unit
74(74a, 74b) flow path part
76(76a, 76b) flow path part
78 middle joining unit
80 cooling heat exchanger (third practical embodiment)
82 flow path member
84 columnar fixed part
90 cooling heat exchanger (fourth practical embodiment)
100 cooling heat exchanger (fifth practical embodiment)
110 cooling heat exchanger (sixth practical embodiment)
120 cooling heat exchanger (seventh practical embodiment)
121 flow path member
122 turbulent flow part
124 first laminar flow part (laminar flow part)
126 second laminar flow part
128 inlet-side flow path part
130 inclined bottom surface
132 outlet-side flow path part
140 cooling heat exchanger (eighth practical embodiment)
142 projection
142a first projection
142b second projection
144 low jutting portion
146 high jutting portion
150 projection (another practical embodiment)
152 projection apex
154 first inclined surface (upstream inclined part)
156 second inclined surface (downstream inclined part)
R radius of curvature of the projection apex
L length dimension of the projection base
α inclination angle of the first inclined surface
β inclination angle of the second inclined surface

## Claims

1. A cooling heat exchanger (10, 60, 80, 90, 100, 110, 120, 140) comprising:
a cooling surface (16) configured to be superposed on a cooling target (52) for cooling the cooling target (52); and
a cooling flow path (36, 68) for causing a cooling heat medium to flow therein,
wherein the cooling flow path (36, 68) includes a parallel flow path unit (38, 70, 72) composed of a plurality of flow path parts (40a, 40b, 40c, 40d, 40e, 74a, 74b, 76a, 76b) extending in parallel and next to each other and causing the heat medium to flow in the same direction between the plurality of flow path parts (40a, 40b, 40c, 40d, 40e, 74a, 74b, 76a, 76b),
the parallel flow path unit (38, 70, 72) is provided with a plurality of projections (42, 142, 150) for disturbing a flow of the heat medium, and
regions where action of disturbing the flow of the heat medium using the projection (42, 142, 150) works differently are defined in the parallel flow path unit (38, 70, 72).

2. The cooling heat exchanger (10, 60, 80, 90, 100, 110, 120, 140) according to claim 1, wherein the flow path part (40a, 40b, 40c, 40d, 40e, 74a, 74b, 76a, 76b) is provided with the plurality of projections (42, 142, 150) aligned in a flow path length direction of the flow path part (40a, 40b, 40c, 40d, 40e, 74a, 74b, 76a, 76b), and a gap between the projections (42, 142, 150) located in a center part in the flow path length direction of the flow path part (40a, 40b, 40c, 40d, 40e, 74a, 74b, 76a, 76b) is narrower than a gap between the projections (42, 142, 150) located on each of both sides in the flow path length direction of the flow path part (40a, 40b, 40c, 40d, 40e, 74a, 74b, 76a, 76b).

3. The cooling heat exchanger (10, 60, 80, 90, 100, 110, 120, 140) according to claim 1 or 2, wherein the projection (42, 142, 150) has a width dimension in a flow path width direction of the flow path part (40a, 40b, 40c, 40d, 40e, 74a, 74b, 76a, 76b) that is equal to or greater than 50% of the flow path width dimension of the flow path part (40a, 40b, 40c, 40d, 40e, 74a, 74b, 76a, 76b).

4. The cooling heat exchanger (10, 60, 80, 90, 100, 110, 120, 140) according to any one of claims 1-3, wherein the flow path width dimension of the flow path part (40a, 40b, 40c, 40d, 40e, 74a, 74b, 76a, 76b) is within a range from 0.3 to 30 times a width dimension of a partition wall (30) making separation between the flow path parts (40a, 40b, 40c, 40d, 40e, 74a, 74b, 76a, 76b) next to each other.

5. The cooling heat exchanger (10, 60, 80, 90, 100, 110, 120, 140) according to any one of claims 1-4, wherein a jutting height dimension of the projection (42, 142, 150) is within a range from 0.1 to 1.3 times a width dimension of the projection (42, 142, 150).

6. The cooling heat exchanger (10, 60, 80, 90, 100, 110, 120, 140) according to any one of claims 1-5, wherein the flow path part (40a, 40b, 40c, 40d, 40e, 74a, 74b, 76a, 76b) is provided with a laminar flow part (124, 126) without the projection (42, 142, 150), and a flow path sectional area of the flow path part (40a, 40b, 40c, 40d, 40e, 74a, 74b, 76a, 76b) in the laminar flow part (124) becomes smaller toward a downstream side.

7. The cooling heat exchanger (10, 60, 80, 90, 100, 110, 120, 140) according to claim 6, wherein a flow path length of the laminar flow part (124, 126) is shorter than a flow path length of a turbulent flow part (122) with the projection (42, 142, 150) defined in a part different from the laminar flow part (124, 126).

8. The cooling heat exchanger (10, 60, 80, 90, 100, 110, 120, 140) according to claim 7, wherein in the turbulent flow part (122) with the projection (42, 142, 150) defined in the part of the flow path part (40a, 40b, 40c, 40d, 40e, 74a, 74b, 76a, 76b) different from the laminar flow part (124, 126), a part except the projection (42, 142, 150) has a constant section.

9. The cooling heat exchanger (10, 60, 80, 90, 100, 110, 120, 140) according to any one of claims 1-8, wherein an inlet-side flow path part (128) is provided on an upstream side of the parallel flow path unit (38, 70, 72) and causes the plurality of flow path parts (40a, 40b, 40c, 40d, 40e, 74a, 74b, 76a, 76b) to branch and extend downstream from the inlet-side flow path part (128),
an outlet-side flow path part (132) is provided on a downstream side of the parallel flow path unit (38, 70, 72) and causes the plurality of flow path parts (40a, 40b, 40c, 40d, 40e, 74a, 74b, 76a, 76b) to join each other, and
the inlet-side flow path part (128) has a larger capacity than the outlet-side flow path part (132).

10. The cooling heat exchanger (10, 60, 80, 90, 100, 110, 120, 140) according to any one of claims 1-9, wherein a jutting height of the projection (42, 142, 150) changes in a flow path width direction of the flow path part (40a, 40b, 40c, 40d, 40e, 74a, 74b, 76a, 76b), one of a low jutting portion (144) having a small jutting height and a high jutting portion (146) having a large jutting height is located in a center part in the flow path width direction of the projection (42, 142, 150), and the other of the low jutting portion (144) having a small jutting height and the high jutting portion (146) having a large jutting height is located on each of both ends in the flow path width direction of the projection (42, 142, 150).

11. The cooling heat exchanger (10, 60, 80, 90, 100, 110, 120, 140) according to claim 10, wherein the flow path part (40a, 40b, 40c, 40d, 40e, 74a, 74b, 76a, 76b) is provided with the plurality of projections (142) aligned in a flow path length direction of the flow path part (40a, 40b, 40c, 40d, 40e, 74a, 74b, 76a, 76b),
the plurality of projections (142) includes a first projection (142a) and a second projection (142b) arranged alternately in the flow path length direction of the flow path part (40a, 40b, 40c, 40d, 40e, 74a, 74b, 76a, 76b), the first projection (142a) including the low jutting portion (144) defined in the center part and the high jutting portion (146) defined in each of the both ends in the flow path width direction of the flow path part (40a, 40b, 40c, 40d, 40e, 74a, 74b, 76a, 76b), the second projection (142b) including the high jutting portion (146) defined in the center part and the low jutting portion (144) defined in each of the both ends in the flow path width direction of the flow path part (40a, 40b, 40c, 40d, 40e, 74a, 74b, 76a, 76b).

12. The cooling heat exchanger (10, 60, 80, 90, 100, 110, 120, 140) according to any one of claims 1-11, wherein the projection (42, 142, 150) has a sectional shape tapered toward a jutting tip in a section in a flow path length direction of the flow path part (40a, 40b, 40c, 40d, 40e, 74a, 74b, 76a, 76b), and the projection (42, 142, 150) includes an arc-like projection apex (45a, 152), an upstream inclined part (46, 154), and a downstream inclined part (48, 156) provided smoothly and continuously with each other without forming an edge, the upstream inclined part (46, 154) extending from the projection apex (45a, 152) toward a projection base (45b) on the side of a bottom surface of the flow path part (40a, 40b, 40c, 40d, 40e, 74a, 74b, 76a, 76b) in an inclined pattern toward an upstream side of the flow path part (40a, 40b, 40c, 40d, 40e, 74a, 74b, 76a, 76b), the downstream inclined part (48, 156) extending from the projection apex (45a, 152) toward the projection base (45b) in an inclined pattern toward a downstream side.

13. The cooling heat exchanger (10, 60, 80, 90, 100, 110, 120, 140) according to claim 12, wherein in the section in the flow path length direction of the flow path part (40a, 40b, 40c, 40d, 40e, 74a, 74b, 76a, 76b), the projection apex (45a, 152) has a radius (R) of curvature within a range from 0.05 to 1.5 times a length dimension (L) of the projection base (45b), and
in the section in the flow path length direction of the flow path part (40a, 40b, 40c, 40d, 40e, 74a, 74b, 76a, 76b), an inclination angle (α) of the upstream inclined part (46, 154) with respect to the bottom surface of the flow path part (40a, 40b, 40c, 40d, 40e, 74a, 74b, 76a, 76b) is within a range from 20 to 70°.

14. The cooling heat exchanger (10, 60, 80, 90, 100, 110, 120, 140) according to claim 12, wherein in the section in the flow path length direction of the flow path part, an inclination angle (α) of the upstream inclined part (46, 154) with respect to the bottom surface of the flow path part (40a, 40b, 40c, 40d, 40e, 74a, 74b, 76a, 76b) is equal to or less than 25°.

15. The cooling heat exchanger (10, 60, 80, 90, 100, 110, 120, 140) according to any one of claims 1-14, wherein the projection (42, 142, 150) extends over an entire flow path width of the flow path part (40a, 40b, 40c, 40d, 40e, 74a, 74b, 76a, 76b) and is continuous with a side wall of the flow path part (40a, 40b, 40c, 40d, 40e, 74a, 74b, 76a, 76b) at each of both ends of the projection (42, 142, 150).
